# EUROPEAN PATENT APPLICATION

(11) **EP 4 492 482 A1**
(43) Date of publication of application: **15.01.2025**
(21) Application number: 24166204.8
(22) Date of filing: 26.03.2024
(51) Int. Cl.: H01M 4/04, H01M 4/13, H01M 50/531, H01M 4/62, H01M 4/66, H01M 50/533, H01M 50/536, H01M 4/1391, H01M 4/02, H01M 50/534, H01M 10/052

(54) **ELECTRODE AND LITHIUM BATTERY INCLUDING THE SAME**

(30) Priority: 26.03.2023 KR 20230039371; 23.08.2023 KR 20230110759
(71) Applicant: Samsung SDI Co., Ltd., Yongin-si, Gyeonggi-do 17084 (KR)
(72) Inventor: KWON, Seunguk, 17084 Yongin-si, Gyeonggi-do (KR); LEE, Jinhyon, 17084 Yongin-si, Gyeonggi-do (KR); PYUN, Ahram, 17084 Yongin-si, Gyeonggi-do (KR); NAM, Hyun, 17084 Yongin-si, Gyeonggi-do (KR); YOON, Yeonhee, 17084 Yongin-si, Gyeonggi-do (KR); CHOI, Jongsup, 17084 Yongin-si, Gyeonggi-do (KR); BANG, Youmin, 17084 Yongin-si, Gyeonggi-do (KR); KIM, Seongdae, 17084 Yongin-si, Gyeonggi-do (KR); LEE, Donggeun, 17084 Yongin-si, Gyeonggi-do (KR); KWON, Ilkyong, 17084 Yongin-si, Gyeonggi-do (KR)
(74) Representative: Gulde & Partner

(57) **Abstract**

Provided herein are an electrode and a lithium battery including the same. The electrode includes an electrode current collector, a metal lead including a first region provided on the electrode current collector and a second region protruding outward from the electrode current collector, and an electrode active material layer provided on the electrode current collector. The electrode active material layer covers at least a portion of a side surface A of the first region of the metal lead.

## Description

### BACKGROUND

### 1. Field

The present disclosure relates to an electrode and a lithium battery including the electrode.

### 2. Description of the Related Art

To meet the demand for miniaturization and high performance of one or more suitable devices, high energy density as well as increased miniaturization and weight reduction of lithium batteries have become important. For example, a lithium battery having a relatively high-capacity have become important.

In the manufacture of electrodes from a slurry including a solvent, the utilization of an excess amount of the solvent during electrode fabrication is likely or unavoidable. Therefore, it is desirable to provide a dry method for preparing a relatively high capacity lithium battery that does not utilize such solvent (e.g., an organic solvent).

### SUMMARY

The invention is defined by the appended claims. The description that follows is subjected to this limitation. Any disclosure lying outside the scope of said claims is only intended for illustrative as well as comparative purposes. One or more aspects are directed toward an electrode with improved energy density by arranging an electrode active material layer on an electrode current collector to cover a side surface of a metal lead.

One or more aspects include a lithium battery including the electrode.

Additional aspects will be set forth in part in the description which follows and, in part, will be apparent from the description, or may be learned by practice of the presented embodiments of the present disclosure.

An electrode includes an electrode current collector,a metal lead including a first region provided on the electrode current collector and a second region protruding outward from the electrode current collector, and an electrode active material layer provided on the electrode current collector, wherein the electrode active material layer covers at least a portion of a side surface A of the first region of the metal lead.

A lithium battery includes a cathode, an anode, and an electrolyte provided between the cathode and the anode, wherein at least one of the cathode or the anode is the electrode as described herein.

### BRIEF DESCRIPTION OF THE DRAWINGS

The preceding and other aspects, features, and advantages of certain embodiments of the present disclosure will be more apparent from the following description taken in conjunction with the accompanying drawings, in which:
FIG. 1 is a plan view of an electrode according to one or more embodiments of the present disclosure;
FIG. 2 is a cross-sectional view of an electrode according to one or more embodiments of the present disclosure;
FIG. 3 is a plan view of an electrode according to one or more embodiments of the present disclosure;
FIG. 4 is a cross-sectional view of an electrode according to one or more embodiments of the present disclosure;
FIG. 5 is a plan view of an electrode according to comparative embodiments of the present disclosure;
FIG. 6 is a cross-sectional view of an electrode according to comparative embodiments of the present disclosure;
FIG. 7 is a scanning electron microscope image of a cross-section of a dry electrode film including a dry binder fibrillized in a first direction according to one or more embodiments of the present disclosure;
FIG. 8 is a schematic view illustrating a method of manufacturing a dry electrode film according to one or more embodiments of the present disclosure;
FIG. 9 is a plan view illustrating uneven portions of metal leads according to one or more embodiments of the present disclosure;
FIG. 10 is a schematic view illustrating a position at which a metal lead is provided on an electrode current collector according to one or more embodiments of the present disclosure;
FIG. 11 is a schematic view of a lithium battery according to one or more embodiments of the present disclosure;
FIG. 12 is a schematic view of a lithium battery according to one or more embodiments of the present disclosure;
FIG. 13 is a schematic view of a lithium battery according to one or more embodiments of the present disclosure;
FIGS. 14A-14E are schematic views illustrating the positions of metal leads of electrodes according to one or more embodiments of the present disclosure; and
FIGS. 15A-15D are schematic views illustrating the positions of metal leads and insulating tapes of electrodes according to comparative embodiments of the present disclosure.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description.

As the present disclosure described hereinafter allows for one or more suitable changes and numerous embodiments, embodiments will be illustrated in the drawings and described in more detail in the detailed description. However, this is not intended to limit the present disclosure to particular modes of practice.

The terms utilized herein are for describing only embodiments. An expression in the singular includes an expression in the plural unless the content (e.g., amount) clearly indicates otherwise. Unless otherwise defined, all chemical names, technical and scientific terms, and terms defined in common dictionaries should be interpreted as having meanings consistent with the context of the related art, and should not be interpreted in an ideal or overly formal sense. It will be understood that, although the terms first, second, etc. may be used herein to describe various elements, these elements should not be limited by these terms. These terms are only used to distinguish one element from another element. Thus, a first element could be termed a second element without departing from the teachings of the present disclosure. Similarly, a second element could be termed a first element.

It should be understood that terms, such as "including," "includes," "include," "having," "has," "have," "comprises," "comprise," and/or "comprising" are utilized to indicate the presence of stated features, numbers, steps, operations, elements, parts, components, materials, or a combination thereof without excluding in advance the possibility of the presence or addition of one or more other features, numbers, steps, operations, elements, parts, components, materials, or a combination thereof. The symbol "/" utilized herein may be interpreted as "and" or "or" depending on the situation.

In the drawings, the thicknesses of one or more suitable layers and regions may be exaggerated or reduced for the clarity of explanation. Like reference numerals refer to like elements throughout, and duplicative descriptions thereof may not be provided the specification. Throughout the specification, if a portion of a layer, a film, a region, a plate, and/or the like is referred to as being "on" or "above" another portion, it includes not only a case in which the portion is directly on the other portion, but also a case in which another portion is present therebetween. While terms such as first, second, and/or the like utilized throughout the specification may be utilized to describe one or more suitable elements, such elements must not be limited by the terms. The terms are utilized only to distinguish one element from another.

The described terms are utilized only to distinguish one component from another. Components having substantially the same functional configuration in the present specification and drawings are denoted by the same reference numerals, and redundant descriptions thereof will not be provided.

The term "combination thereof" may include a mixture, a laminate, a complex, a copolymer, an alloy, a blend, a reactant of constituents.

As used herein, singular forms such as "a," "an," and "the" are intended to include the plural forms as well, unless the context clearly indicates otherwise.

As used herein, the terms "use," "using," and "used" may be considered synonymous with the terms "utilize," "utilizing," and "utilized," respectively.

As used herein, expressions such as "at least one of," "one of," and "selected from," if preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

Spatially relative terms, such as "beneath," "below," "lower," "above," "upper," "bottom," "top," and the like, may be used herein for ease of description to describe one element or feature's relationship to another element(s) or feature(s) referring to the drawings. It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

In present disclosure, "not include a or any 'component'", "exclude a or any 'component'", "'component'-free", and/or the like refers to that the "component" not being added, selected or utilized as a component in the composition, but the "component" of less than a suitable amount may still be included due to other impurities and/or external factors.

### Definitions

The term "dry" as utilized herein refers to a state that does not intentionally contact a solvent such as a processing solvent or a state that does not intentionally include a solvent. For example, a dry conductive material refers to a conductive material that does not intentionally contact a solvent or a conductive material that does not intentionally include a solvent. For example, a dry binder refers to a binder that does not intentionally contact a solvent or a binder that does not intentionally include a solvent. For example, a binder that is in a liquid state at room temperature without being mixed with a solvent is a dry binder.

As utilized herein, the length of an electrode, the thickness of an electrode, the diameter of through-holes, the depth of through-holes, and the area of through-holes refer to the average length of an electrode, the average thickness of an electrode, the average diameter of through-holes, the average depth of through-holes, and the average area of through-holes, respectively. An average value may be, for example, an arithmetic average of values measured at a plurality of points. The length of an electrode, the thickness of an electrode, the diameter of through-holes, the depth of through-holes, and the area of through-holes may each be measured by utilizing a micrometer, or from a scanning electron microscopic image or an optical microscopic image.

The term "particle diameter" as utilized herein refers to an average diameter of particles if (e.g., when) the particles are spherical, and refers to an average major axis length of particles if (e.g., when) the particles are non-spherical. The particle diameter of the particles may be measured by utilizing a particle size analyzer (PSA). The "particle diameter" of the particles may be, for example, an average particle diameter. The average particle diameter may be, for example, a median particle diameter (D50). The median particle diameter (D50) refers to the size of particles corresponding to 50% cumulative volume in a particle size distribution measured by a laser diffraction method, counted from the side of particles having the smallest particle size. In other embodiments, the average particle diameter may be measured manually or by software from a scanning electron microscope (SEM) image or a transmission electron microscope (TEM) image. Also, depending on context, when particles are spherical, "diameter" indicates a particle diameter or an average particle diameter, and when the particles are non-spherical, the "diameter" indicates a major axis length or an average major axis length.

The "glass transition temperature T_{g}" of dry binder may be determined by dynamic mechanical analysis (DMA) according to ISO 6721-11:2019. The glass transition temperature T_{g} of the dry binder may mean the glass transition temperature measured with respect to the dry binder using a DSC discovery (TA Instrument Inc.). The dry binder is heated to 180°C at a rate of 20°C/min, slowly cooled to -100°C at the same rate, and heated to 100°C at a rate of 10°C/min in order to obtain an endothermic transition curve. Then, an inflection point of the endothermic transition curve may be determined as the glass transition temperature.

In the present disclosure, "metal" includes both (e.g., simultaneously) metals and metalloids such as silicon and germanium, in elemental or ionic states.

The term "alloy" as utilized herein refers to a mixture of two or more metals.

The term "cathode active material" as utilized herein refers to a cathode material that can undergo lithiation and delithiation.

The term "anode active material" as utilized herein refers to an anode material that can undergo lithiation and delithiation.

The terms "lithiation" and "lithiate" as utilized herein refer to a process of adding lithium to a cathode active material or an anode active material.

The terms "delithiation" and "delithiate" as utilized herein refer to a process of removing lithium from a cathode active material or an anode active material.

The terms "charging" and "charge" as utilized herein refer to a process of providing electrochemical energy to a battery.

The terms "discharging" and "discharge" as utilized herein refer to a process of removing electrochemical energy from a battery.

The term "positive electrode" and "cathode" as utilized herein refers to an electrode where electrochemical reduction and lithiation occur during a discharge process.

The term "negative electrode" and "anode" as utilized herein refers to an electrode where electrochemical oxidation and delithiation occur during a discharge process.

Hereinafter, an electrode according to one or more embodiments and a lithium battery including the same will be described in more detail.

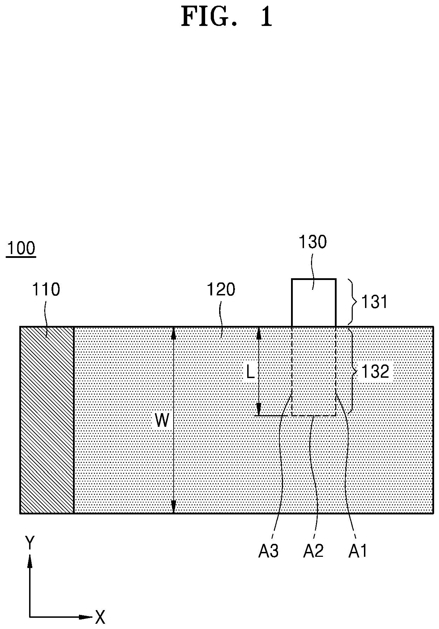

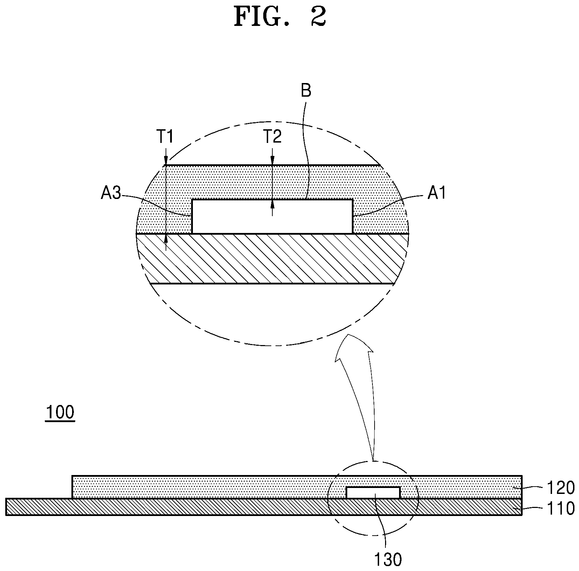

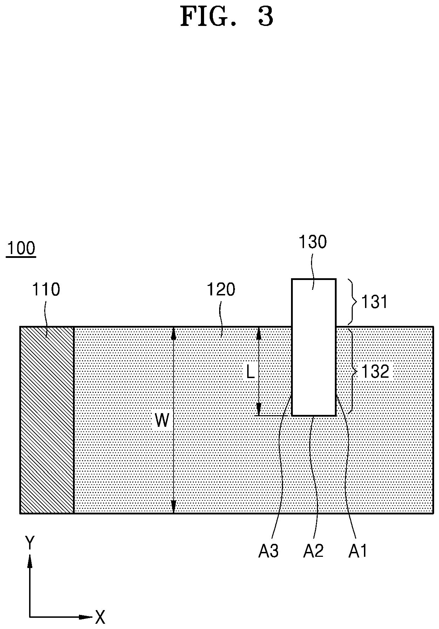

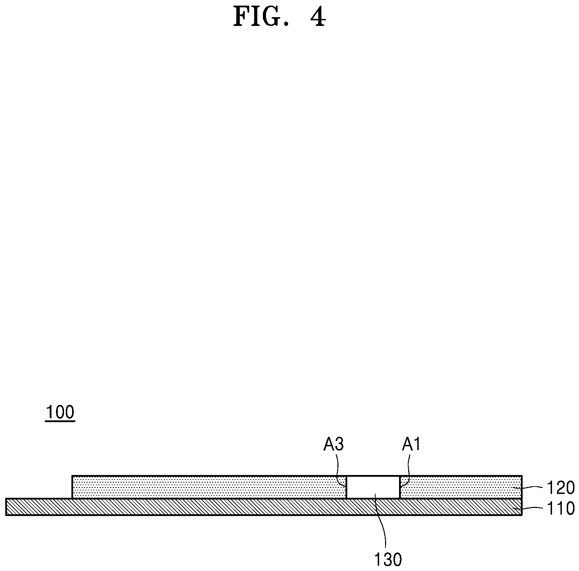

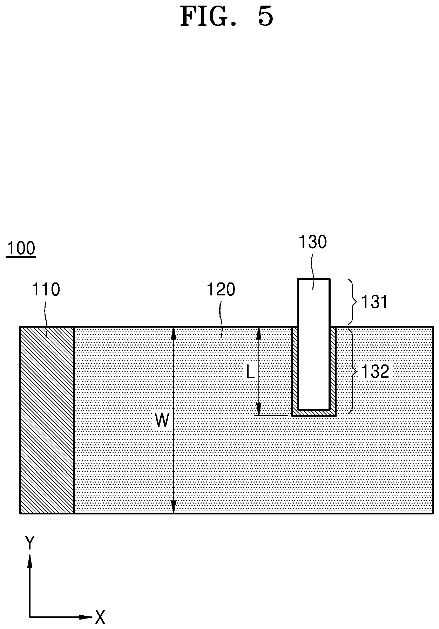

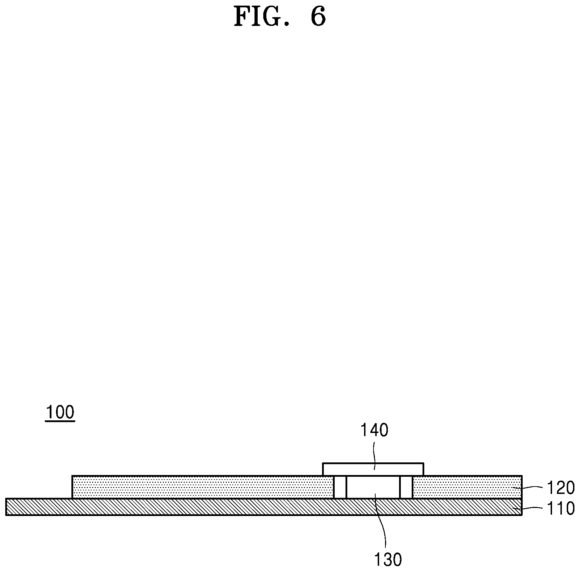

FIG. 1 is a plan view of an electrode according to one or more embodiments. FIG. 2 is a cross-sectional view of an electrode according to one or more embodiments. FIG. 3 is a plan view of an electrode according to other embodiments. FIG. 4 is a cross-sectional view of an electrode according to other embodiments. FIG. 5 is a plan view of an electrode according to comparative embodiments. FIG. 6 is a cross-sectional view of an electrode according to comparative embodiments.

Hereinafter, an electrode according to one or more embodiments and a lithium battery including the same will be described in more detail with reference to FIGS. 1 to 6.

An electrode 100 according to one or more embodiments includes: an electrode current collector 110; a metal lead 130 including a first region 132 provided on the electrode current collector 110 and a second region 131 protruding outward from the electrode current collector 110; and an electrode active material layer 120 provided on the electrode current collector 110. The electrode active material layer 120 covers at least a portion of a side surface A (e.g., A1, A2, A3) of the first region 132 of the metal lead 130. For example, assuming that, in the first region 132 provided on the current collector 110, a surface of the metal lead 130 contacting the electrode current collector 110 is defined as a lower surface, and a surface of the metal lead 130 opposite to the lower surface is defined as an upper surface B, the side surface A (e.g., A1, A2, A3) of the first region 132 may refer to a surface connecting the lower surface to the upper surface B. For example, if (e.g., when) the electrode active material layer 120 covers the side surface A (e.g., A1, A2, A3) of the first region 132, an area of the electrode current collector 110 on which the electrode active material layer 120 is coated may increase, resulting in improved cell capacity and energy density of the electrode 100.

In one or more embodiments, the electrode active material layer 120 may cover at least a portion of a first side surface A1, a second side surface A2 and a third side surface A3 of the metal lead 130.

Referring to FIGS. 5 and 6, in existing electrodes, an electrode active material layer may be arranged on an electrode current collector, and then a metal lead may be attached to the electrode current collector, and to attach the metal lead onto the electrode current collector, an area of the electrode current collector on which the electrode active material layer is not arranged is required in arrangement of the electrode active material layer, and accordingly, a side surface of a first region of the metal lead may be provided to be spaced and/or apart from the electrode active material layer. In one or more embodiments of the present disclosure, referring to FIGS. 1 to 4, in the electrode 100, the metal lead 130 may be attached onto the electrode current collector 110, and then, the electrode active material layer 120 may be arranged on the electrode current collector 110, and accordingly, the electrode active material layer 120 may cover a side surface of the first region 132 of the metal lead 130. In one or more embodiments, an area of the electrode current collector 110 on which the electrode active material layer 120 is provided may increase, and thus, the energy density and cell capacity of the electrode 100 may be improved.

In one or more embodiments, the side surface A of the first region 132 of the metal lead 130 may directly contact the electrode active material layer 120.

In one or more embodiments, the electrode active material layer 120 may be a dry electrode film, and the dry electrode film may be a self-standing film and may be free of (e.g., may exclude) a residual processing solvent. For example, if (e.g., when) the electrode active material layer 120 is a dry electrode film, the metal lead 130 may be attached onto the electrode current collector 110, and then the electrode active material layer 120 may be arranged on the electrode current collector 110, unlike existing electrodes. Accordingly, the electrode active material layer 120 may more easily cover a side surface of the first region 132 of the metal lead 130.

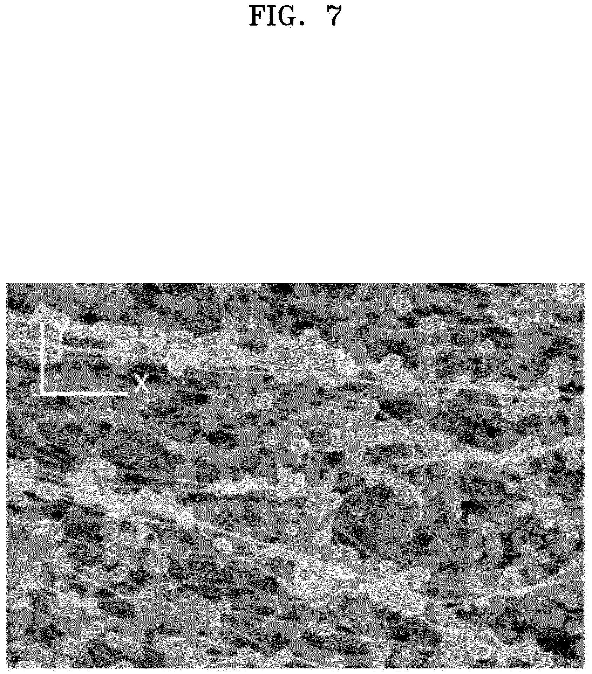

FIG. 7 is a scanning electron microscope (SEM) image of the cross-section of a dry electrode film according to one or more embodiments. Referring to FIG. 7, the electrode active material layer 120 may include a fibrillized dry binder in a first direction. The first direction may be, for example, an X-axis direction in FIG. 1. For example, the first direction may be a machine direction (MD).

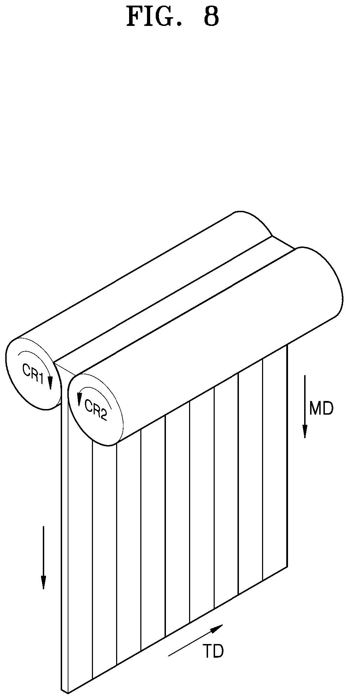

FIG. 8 is a schematic view illustrating a method of manufacturing a dry electrode film according to one or more embodiments.

Referring to FIG. 8, a composition for a dry electrode film passes between a pair of calender rolls CR1 and CR2 to be processed into a dry electrode film. A direction in which the dry electrode film is formed and moves may be a machine direction (MD) of the dry electrode film. As a first dry electrode active material composition is stretched in the machine direction while passing between a pair of calender rolls, a first dry electrode active material layer may include a first dry binder fibrillized in the machine direction. A width direction (TD) of the first dry electrode active material layer may be a direction perpendicular to the machine direction (MD) of the first dry electrode active material layer.

In one or more embodiments, the dry electrode film may include a dry electrode active material and a dry binder.

In embodiments, the dry electrode active material may be a cathode active material. In other embodiments, the dry electrode active material may include an anode active material.

For example, if (e.g., when) the dry electrode film is a cathode film, the dry electrode active material may include a cathode active material.

For example, the cathode active material may be any lithium metal oxide commonly utilized in the art without limitation.

The cathode active material may be, for example, at least one composite oxide of lithium and a metal selected from among cobalt, manganese, nickel, and a combination thereof, and may be, for example, a compound represented by any one of the following formulae: LiₐA_{1-b}B_{b}D₂ where 0.90 ≤ a ≤ 1 and 0 ≤ b ≤ 0.5; LiₐE_{1-b}B_{b}O_{2-c}D_{c} where 0.90 ≤ a ≤ 1, 0 ≤ b ≤ 0.5, and 0 ≤ c ≤ 0.05; LiE_{2-b}B_{b}O_{4-c}D_{c} where 0 ≤ b ≤ 0.5 and 0 ≤ c ≤ 0.05; LiₐNi_{1-b-c}Co_{b}B_{c}O_{α} where 0.90 ≤ a ≤ 1, 0 ≤ b ≤ 0.5, 0 ≤ c ≤ 0.05, and 0 < α ≤ 2; LiₐNi_{1-b-c}Co_{b}B_{c}O_{2-α}F_{α} where 0.90 ≤ a ≤ 1, 0 ≤ b ≤ 0.5, 0 ≤ c ≤ 0.05, and 0 < α < 2; LiₐNi_{1-b-c}Co_{b}B_{c}O_{2-α}F₂ where 0.90 ≤ a ≤ 1, 0 ≤ b ≤ 0.5, 0 ≤ c ≤ 0.05, and 0 < α < 2; LiₐNi_{1-b-c}Mn_{b}B_{c}O_{α} where 0.90 ≤ a≤ 1, 0 ≤ b ≤ 0.5, 0 ≤ c ≤ 0.05, and 0 < α ≤ 2; LiₐNi_{1-b-c}Mn_{b}B_{c}O_{2-α}F_{α} where 0.90 ≤ a ≤ 1, 0 ≤ b ≤ 0.5, 0 ≤ c ≤ 0.05, and 0 < α < 2; LiₐNi_{1-b-c}Mn_{b}B_{c}O_{2-α}F₂ where 0.90 ≤ a ≤ 1, 0 ≤ b ≤ 0.5, 0 ≤ c ≤ 0.05, and 0 < α < 2; LiₐNi_{b}E_{c}G_{d}O₂ where 0.90 ≤ a ≤ 1, 0 ≤ b ≤ 0.9, 0 ≤ c ≤ 0.5, and 0.001 ≤ d ≤ 0.1; LiₐNi_{b}Co_{c}Mn_{d}GeO₂ where 0.90 ≤ a ≤ 1, 0 ≤ b ≤ 0.9, 0 ≤ c ≤ 0.5, 0 ≤ d ≤0.5, and 0.001 ≤ e ≤ 0.1; LiₐNiG_{b}O₂ where 0.90 ≤ a ≤ 1 and 0.001 ≤ b ≤ 0.1; LiₐCoG_{b}O₂ where 0.90 ≤ a ≤ 1 and 0.001 ≤ b ≤ 0.1;LiₐMnG_{b}O₂ where 0.90 ≤ a ≤ 1 and 0.001 ≤ b ≤ 0.1; LiₐMn₂G_{b}O₄ where 0.90 ≤ a ≤ 1 and 0.001 ≤ b ≤ 0.1; QO₂; QS₂; LiQS₂; V₂O₅; LiV₂O₅; LiIO₂; LiNiVO₄; Li_{(3-f)}J₂(PO₄)₃ where 0 ≤ f ≤ 2; Li_{(3-f)}Fe₂(PO₄)₃ where 0 ≤ f ≤ 2; and LiFePO₄.

In the formulae of the described compounds, A may be nickel (Ni), cobalt (Co), manganese (Mn), or a combination thereof, B may be aluminum (Al), Ni, Co, Mn, chromium (Cr), iron (Fe), magnesium (Mg), strontium (Sr), vanadium (V), a rare earth element, or a combination thereof, D may be oxygen (O), fluorine (F), sulfur (S), phosphorus (P), or a combination thereof, E may be Co, Mn, or a combination thereof, F may be F, S, P, or a combination thereof, G may be Al, Cr, Mn, Fe, Mg, lanthanum (La), cerium (Ce), strontium (Sr), V, or a combination thereof, Q may be titanium (Ti), molybdenum (Mo), Mn, or a combination thereof, I may be Cr, V, Fe, scandium (Sc), yttrium (Y), or a combination thereof, and J may be V, Cr, Mn, Co, Ni, copper (Cu), or a combination thereof.

Also, the mentioned compound with a coating layer on the surface may be utilized, or a mixture of the compound described herein and another compound having a coating layer may be utilized. The coating layer provided on the surface of the described compound may include, for example, a coating element compound, such as an oxide of a coating element, a hydroxide of a coating element, an oxyhydroxide of a coating element, an oxycarbonate of a coating element, or a hydroxyl carbonate of a coating element. The compound constituting the coating layer may be amorphous or crystalline. The coating element included in the coating layer may be Mg, Al, Co, potassium (K), sodium (Na), calcium (Ca), silicon (Si), Ti, V, tin (Sn), germanium (Ge), gallium (Ga), boron (B), arsenic (As), zirconium (Zr), or a mixture thereof. A coating layer formation method may be selected from methods that do not adversely affect the physical properties of the cathode active material. The coating method may be, for example, spray coating, immersion, and/or the like. The coating methods will be obvious to those of ordinary skill in the art, and thus, detailed descriptions thereof will not be provided herein.

The cathode active material may be, for example, a composite cathode active material.

For example, the composite cathode active material may include: a core including a lithium transition metal oxide; and a shell provided along a surface of the shell, wherein the shell includes: at least one first metal oxide represented by Formula MₐO_{b} where 0<a≤3 and 0<b<4, if (e.g., when) a is 1, 2, or 3, b is not an integer); and graphene, the first metal oxide may be placed in a matrix of the graphene, M may be at least one metal selected from among Groups 2 to 13, Group 15, and Group 16 of the periodic table of elements, the lithium transition metal oxide may contain nickel, and the content (e.g., amount) of nickel may be 80 mol% or more with respect to a total number of moles of transition metals. The shell including the first metal oxide and graphene may be provided on the core of the composite cathode active material.

Existing graphene may be difficult to coat uniformly on a core due to agglomeration. In some embodiments, the composite cathode active material may utilize a composite including a plurality of first metal oxides provided in the graphene matrix, and thus, the agglomeration of graphene may be prevented or reduced and a substantially uniform shell may be provided on the core. Contact between the core and an electrolyte may be then effectively prevented or reduced, and thus, side reactions due to the contact between the core and an electrolyte may be prevented or reduced. In some embodiments, the reduction (Ni³⁺->Ni²⁺) of nickel ions and cation mixing by an electrolyte solution may be suppressed or reduced, thus suppressing the formation of a resistance layer such as an NiO phase. In some embodiments, elution of nickel ions may be suppressed or reduced. The shell including graphene may be flexible, and thus, a change in the volume of the composite cathode active material may be easily accommodated during charging and discharging, and thus, occurrence of cracks inside the composite cathode active material may be suppressed or reduced. Graphene has high electronic conductivity, and thus, the interfacial resistance between the composite cathode active material and an electrolyte solution may be reduced. Therefore, despite the introduction of the shell including graphene, the internal resistance of a lithium battery may be maintained or reduced. In some embodiments, the first metal oxide has voltage resistance, and thus may prevent or reduce deterioration of the lithium transition metal oxide included in the core during charging and discharging. As a result, the cycle characteristics and high-temperature stability of a lithium battery including the composite cathode active material may be improved. The shell may include, for example, one type or kind of first metal oxide or two or more types (kinds) of different first metal oxides. In some embodiments, in the composite cathode active material, the lithium transition metal oxide may have a nickel content (e.g., amount) of 80 mol% or more with respect to the total number of moles of transition metals, and the shell including a first metal oxide and graphene may be provided on the core, thus concurrently (e.g., simultaneously) providing high discharge capacity and cycle characteristics. Therefore, the composite cathode active material with a high nickel content (e.g., amount) of 80 mol% or more may provide improved capacity compared to a composite cathode active material with a relatively low nickel content (e.g., amount), while still providing excellent or suitable lifespan characteristics. A metal included in the first metal oxide may be, for example, at least one selected from among Al, Nb, Mg, Sc, Ti, Zr, V, W, Mn, Fe, Co, Pd, Cu, Ag, Zn, Sb, and Se.

The first metal oxide may be, for example, at least one selected from among Al₂O_{z} where 0<z<3, NbOₓ where 0<x<2.5, MgOₓ where 0<x<1, Sc₂O_{z} where 0<z<3, TiO_{y} where 0<y<2, ZrO_{y} where 0<y<2, V₂O_{z} where 0<z<3, WO_{y} where 0<y<2, MnO_{y} where 0<y<2, Fe₂O_{z} where 0<z<3, Co₃O_{w} where 0<w<4, PdOₓ where 0<x<1, CuOₓ where 0<x<1, AgOₓ where 0<x<1, ZnOₓ where 0<x<1, Sb₂O_{z} where 0<z<3, and SeO_{y} where 0<y<2. By arranging such a first metal oxide in the graphene matrix, the uniformity of the shell provided on the core may be improved, and the withstand voltage of the composite cathode active material may be further improved. For example, the shell may include Al₂Oₓ where 0<x<3 as the first metal oxide. The shell may further include one or more second metal oxides represented by MₐO_{c} where 0<a≤3 and 0<c≤4, if (e.g., when) a is 1, 2, or 3, c is an integer. M may be at least one metal selected from among Groups 2 to 13, Group 15, and Group 16 of the periodic table of elements. For example, the second metal oxide may include the same metal as the first metal oxide, and a ratio (c/a) of c to a in the second metal oxide may has a greater value than a ratio (b/a) of b to a in the first metal oxide. For example, c/a >b/a may be satisfied. The second metal oxide may be, for example, selected from among Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide may be a reduction product of the second metal oxide. The first metal oxide may be obtained by reducing part or all of the second metal oxide. Accordingly, the first metal oxide may have a lower oxygen content (e.g., amount) and a lower metal oxidation number than the second metal oxide. For example, the shell may include Al₂Oₓ where 0<x<3 as the first metal oxide and Al₂O₃ as the second metal oxide. In the composite cathode active material, for example, graphene included in the shell may be chemically bonded to a transition metal of the lithium transition metal oxide included in the core through a chemical bond. A carbon atom (C) of graphene included in the shell may be chemically bonded to a transition metal (Me) of the lithium transition metal oxide via an oxygen atom through C-O-Me bonding (for example, C-O-Ni bonding). Graphene included in the shell may be chemically bonded to the lithium transition metal oxide included in the core, thereby providing a composite of the core and the shell. Therefore, the composite of the core and the shell may be distinguished from a simple physical mixture of graphene and a lithium transition metal oxide. In other embodiments, the first metal oxide and graphene included in the shell may also be chemically bonded through a chemical bond. In this regard, the chemical bond may be, for example, a covalent bond or an ionic bond. The covalent bond may be, for example, a bond including at least one of an ester group, an ether group, a carbonyl group, an amide group, a carbonate anhydride group, or an acid anhydride group. The ionic bond may be, for example, a bond including a carboxylic acid ion, an ammonium ion, an acyl cation group, and/or the like. The thickness of the shell may be, for example, in a range of about 1 nanometer (nm) to about 5 micrometer (µm), about 1 nm to about 1 µm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. If (e.g., when) the thickness of the shell is within the described range, an increase in the internal resistance of a lithium battery including the composite cathode active material may be suppressed or reduced.

The amount of a composite included in the composite cathode active material may be 3 wt% or less, 2 wt% or less, 1 wt% or less, 0.5 wt% or less or 0.2 wt% or less, with respect to the total weight of the composite cathode active material. The amount of the composite may be in a range of about 0.01 wt% to about 3 wt%, about 0.01 wt% to about 1 wt%, about 0.01 wt% to about 0.7 wt%, about 0.01 wt% to about 0.6 wt%, about 0.01 wt% to about 0.5 wt%, about 0.01 wt% to about 0.2 wt%, about 0.01 wt% to about 0.1 wt%, or about 0.03 wt% to about 0.07 wt%, with respect to the total weight of the composite cathode active material. If (e.g., when) the amount of the composite included in the composite cathode active material is within the described range, a lithium battery including the composite cathode active material may have further improved cycle characteristics. At least one selected from the first metal oxide and the second metal oxide included in the composite may have an average particle diameter of about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. If (e.g., when) the first metal oxide and/or the second metal oxide has a particle diameter within this nanometer range, the first metal oxide and/or the second metal oxide may be more uniformly distributed in the graphene matrix of the composite. Therefore, such a composite may be uniformly coated on the core without agglomeration to form a shell. In other embodiments, the first metal oxide and/or the second metal oxide may be more uniformly provided on the core if (e.g., when) the first metal oxide and/or the second metal oxide has (have) a particle diameter within the described range. Therefore, by uniformly providing the first metal oxide and/or the second metal oxide on the core, voltage resistance characteristics may be more effectively exhibited. The average particle diameters of the first metal oxide and the second metal oxide may be measured by utilizing, for example, a measurement apparatus utilizing a laser diffraction method or a dynamic light scattering method. The average particle diameter thereof may be measured by utilizing a laser scattering particle size distribution meter (for example, LA-920 available from Horiba Corporation), and may be a value of the median diameter (D50) if (e.g., when) metal oxide particles are accumulated to 50% from the smallest particles in volume conversion.

The core included in the composite cathode active material may include, for example, a lithium transition metal oxide represented by one of Formulae 1 to 8:

Formula 1 LiₐCoₓM_{y}O_{2-b}A_{b}

wherein, in Formula 1,1.0≤a≤1.2, 0≤b≤0.2, 0.9≤x≤1, 0≤y≤0.1, and x+y=1,
M may be manganese (Mn), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and
A may be F, S, Cl, Br, or a combination thereof,

   Formula 2 LiₐNiₓCo_{y}M_{z}O_{2-b}A_{b}
wherein, in Formula 2,1.0≤a≤1.2, 0≤b≤0.2, 0.8≤x<1, 0≤y≤0.3, 0<z≤0.3, and x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and
A may be F, S, Cl, Br, or a combination thereof,

   Formula 3 LiNiₓCo_{y}Mn_{z}O₂

   Formula 4 LiNiₓCo_{y}Al_{z}O₂
wherein, in Formulae 3 and 4, 0.8≤x≤0.95, 0≤y≤0.2, 0<z≤0.2, and x+y+z=1,

   Formula 5 LiNiₓCo_{y}Mn_{z}Al_{w}O₂
wherein, in Formula 5, 0.8≤x≤0.95, 0≤y≤0.2, 0<z≤0.2, 0<w≤0.2, and x+y+z=1,

   Formula 6 LiₐNiₓMn_{y}M'_{z}O_{2-b}A_{b}
wherein, in Formula 6,1.0≤a≤1.2, 0≤b≤0.2, 0<x≤0.3, 0.5≤y<1, 0<z≤0.3, and x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and
A may be F, S, Cl, Br, or a combination thereof,

   Formula 7 LiₐM1ₓM2_{y}PO_{4-b}X_{b}
wherein, in Formula 7, 0.90≤a≤1.1, 0≤x≤0.9, 0≤y≤0.5, 0.9<x+y<1.1, and 0≤b≤2,
M1 may be chromium (Cr), manganese (Mn), iron (Fe), cobalt (Co), nickel (Ni), copper (Cu), zirconium (Zr), or a combination thereof,
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P or a combination thereof,

   Formula 8 LiₐM3_{z}PO₄
wherein, in Formula 8, 0.90≤a≤1.1 and 0.9≤z≤1.1, and
M3 may be chromium (Cr), manganese (Mn), iron (Fe), cobalt (Co), nickel (Ni), copper (Cu), zirconium (Zr), or a combination thereof.

The amount of the cathode active material included in the dry electrode film may be, for example, in a range of about 80 wt% to about 98 wt% or about 90 wt% to about 98 wt%, with respect to the total weight of the dry electrode film.

For example, if (e.g., when) the dry electrode film is an anode film, the dry electrode active material may include an anode active material.

For example, the anode active material may be any anode active material of a lithium secondary utilized in the art. For example, the anode active material may include at least one selected from among lithium metal, a metal alloyable with lithium, a transition metal oxide, a non-transition metal oxide, and a carbon-based material. The metal alloyable with lithium may be, for example, Si, Sn, Al, Ge, Pb, Bi, an Si-Y alloy where Y is an alkali metal, an alkali earth metal, a Group 13 element, a Group 14 element, a transition metal, a rare earth element, or a combination thereof, except for Si, an Sn-Y alloy where Y is an alkali metal, an alkali earth metal, a Group 13 element, a Group 14 element, a transition metal, a rare earth element, or a combination thereof, except for Sn, and/or the like. Examples of the element Y include magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), and/or one or more combinations thereof. The transition metal oxide may be, for example, lithium titanium oxide, vanadium oxide, lithium vanadium oxide, and/or the like. The non-transition metal oxide may be, for example, SnO₂, SiOₓ where 0<x≤2, and/or the like. The carbon-based material may be, for example, crystalline carbon, amorphous carbon, or a mixture thereof. Examples of the crystalline carbon include graphite such as natural graphite and artificial graphite that is in amorphous, plate, flake, spherical, or fibrous form. Non-limiting examples of the amorphous carbon include soft carbon (carbon calcined at low temperatures), hard carbon, meso-phase pitch carbides, and calcined cokes.

The amount of the anode active material included in the dry electrode film may be, for example, in a range of about 80 wt% to about 98 wt% or about 90 wt% to about 98 wt%, with respect to the total weight of the dry electrode film.

For example, the dry electrode film may include a dry binder, and the dry binder may be a binder that is not impregnated, dissolved, or dispersed in a processing solvent during the dry electrode film manufacturing process. The dry binder may be, for example, a binder that does not include, or come into contact with, a processing solvent during the dry electrode film manufacturing process. The dry binder may be a fibrillized binder or a fibrous binder. The fibrillized binder or the fibrous binder may serve as a matrix that supports and binds the dry electrode active material and other components included in the dry electrode film. The fibrillized binder or the fibrous binder may be confirmed to have a fibrous form, for example, from a scanning electron microscope image of the cross-section of an electrode referring to FIG. 7. The fibrillized binder or the fibrous binder may have an aspect ratio of, for example, 10 or more, 20 or more, 50 or more, or 100 or more.

The dry binders may each independently include, for example, polytetrafluoroethylene (PTFE), a polyvinylidene fluoride-hexapropylene (PVDF-HFP) copolymer, polyvinylidene fluoride (PVDF), polyvinyl alcohol (PVA), polyacrylonitrile (PAN), carboxymethyl cellulose (CMC), starch, hydroxy propyl cellulose, cellulose, polyvinylpyrrolidone (PVP), polyethylene (PE), polypropylene (PP), ethylene-propylene-diene monomer (EPDM) rubber, sulfonated-EPDM rubber, styrene butadiene rubber (SBR), fluorine-containing rubber, or a combination thereof, but the present disclosure is not limited thereto, and may be any binder utilized in the manufacture of a dry electrode. The dry binder may include, for example, a fluorine-based binder. The fluorine-based binder may be, for example, polytetrafluoroethylene (PTFE), a polyvinylidene fluoride-hexapropylene (PVDF-HFP) copolymer, polyvinylidene fluoride (PVDF), or a combination thereof.

The dry binder may have a glass transition temperature (T_{g}) of, for example, about -30 °C to about 150 °C, about 15 °C to about 150 °C, about 15 °C to about 130 °C, about 50 °C to about 130 °C, about 100 °C to about 130 °C, or about 120 °C to about 130 °C. The glass transition temperature (T_{g}) of the dry binder may be, for example, in a range of about -30 °C to about 150 °C, about 15 °C to about 150 °C, about 15 °C to about 130 °C, about 50 °C to about 130 °C, about 100 °C to about 130 °C, or about 120 °C to about 130 °C. The glass transition temperature of polytetrafluoroethylene (PTFE) may be, for example, in a range of about 120 °C to about 130 °C. If (e.g., when) the glass transition temperature of the dry binder is within the described range, the fibrillized binder or the fibrous binder may be more easily obtained in the dry electrode manufacturing process.

The amount of the dry binder may be, for example, in a range of about 0.1 wt% to about 5 wt%, about 0.5 wt% to about 4 wt%, or about 1 wt% to about 3 wt%, with respect to the total weight of the dry electrode film. If (e.g., when) the amount of the dry binder included in the dry electrode film is within the described range, the adhesion of the dry electrode film may be improved, and the dry electrode film may maintain high energy density. The amount of the dry binder may be, for example, in a range of about 0.1 wt% to 5 wt%, about 0.5 wt% to about 4 wt%, or about 1 wt% to about 3 wt%.

The dry electrode film may further include, for example, a conductive material. The conductive material may be, for example, a dry conductive material. The dry conductive material may be, for example, a conductive material that is not impregnated, dissolved, or dispersed in a processing solvent during the dry electrode film manufacturing process. The dry conductive material may be, for example, a conductive material that does not include, or come into contact with, a processing solvent during the dry electrode film manufacturing process. The dry conductive material may include, for example, a carbon-based conductive material. The carbon-based conductive material may include, for example, a fibrous carbon-based material having an aspect ratio of 10 or more, a particulate carbon-based material having an aspect ratio of 5 or less, or a combination thereof. The dry conductive material may include, for example, a dry conductive material provided on the dry electrode film.

The fibrous carbon-based material having an aspect ratio of 10 or more may be, but is not limited to, for example, carbon fibers, carbon nanotubes, or carbon nanobelts, and may be any carbon-based conductive material utilized in the art.

The particulate carbon-based material having an aspect ratio of 5 or less may be, but is not limited to, for example, carbon black, acetylene black, Ketjen black, natural graphite, or artificial graphite, and may be any carbon-based conductive material utilized in the art. The aspect ratio of the particulate carbon-based material may be, for example, in a range of about 1 to about 5, about 1 to about 4, about 1 to about 3, or about 1 to 2.

For example, the amount of the dry conductive material included in the dry electrode film may be, for example, in a range of about 0.1 wt% to about 5 wt%, about 0.5 wt% to about 4 wt%, or about 1 wt% to about 3 wt%, with respect to the total weight of the dry electrode film.. The amount of the dry conductive material included in the dry electrode film, which is included in the electrode active material layer 120, may be, for example, in a range of about 0.1 wt% to about 5 wt%, about 0.5 wt% to about 4 wt%, or about 1 wt% to about 3 wt%, with respect to the total weight of the dry electrode film.. If (e.g., when) the amount of the dry conductive material included in the dry electrode film is within the described range(s), the conductivity of the dry electrode film may be improved, and the cycle characteristics of a lithium battery including such a dry electrode film may be improved.

The dry electrode film may be free of (e.g., may exclude) a residual processing solvent. The dry electrode film may include a dry electrode active material, a dry binder, and a dry conductive material, and no processing solvent is utilized in the dry electrode film manufacturing process, and thus, the dry electrode film may be free of (e.g., may exclude) an intentionally utilized residual processing solvent. The dry electrode film included in the electrode active material layer 120 may be manufactured in a dry manner, and thus may be free of (e.g., may exclude) an intentionally added processing solvent. An unintended trace amount of solvent may remain in the dry electrode film included in the electrode active material layer 120, but the solvent is not an intentionally added processing solvent. The dry electrode film including the electrode active material layer 120 is then distinguished from a wet electrode active material layer prepared by mixing components and a processing solvent, and then removing part or all of the processing solvent by drying.

In some embodiments, the electrode active material layer 120 may cover the entire side surface A (e.g., may totally cover the side surface A) of the first region 132. For example, the electrode active material layer 120 may (e.g., totally) cover the entire first side surface A1, the entire second side surface A2 and the entire third side surface A3 of the first region 132.

In some embodiments, the electrode 100 may be free of (e.g., may exclude) an insulating layer 140 provided on the metal lead 130, and the electrode 100 may be free of (e.g., may exclude) an insulating layer 140 provided on the electrode current collector 110. Referring to FIG. 6, in existing electrodes, the metal lead 130 and the electrode active material layer 120 are provided to be spaced and/or apart from each other, and thus, the electrode current collector 110 is exposed, and the insulating layer 140 may be provided on the electrode current collector 110 and the first region 132, to prevent or reduce exposure of the electrode current collector 110. In the electrode 100 according to the present embodiments, the electrode active material layer 120 may cover at least a portion of the side surface A (e.g., A1, A2, A3) of the first region 132, and thus, the electrode current collector 110 may not be exposed, and the electrode 100 may be free of the insulating layer 140. In embodiments, the total volume of the electrode may be reduced by exclusion of the insulating layer 140 in the electrode 100, resulting in increased energy density of the electrode 100.

In some embodiments, the electrode active material layer 120 may further cover at least a portion of the upper surface B of the first region 132. Referring to FIGS. 1 and 2, the electrode active material layer 120 may further cover at least a portion of the upper surface B of the first region 132 of the metal lead 130. For example, the electrode active material layer 120 may totally cover the upper surface B of the first region 132.

In other embodiments, the electrode active material layer 120 may be free (e.g., may be missing) on the upper surface B of the first region 132(e.g., the upper surface B of the first region 132 may be exposed). Referring to FIGS. 3 and 4, the electrode active material layer 120 may be free (e.g., may be missing) on the upper surface B of the first region 132 of the metal lead 130(e.g., the upper surface B of the first region 132 may be exposed).

In some embodiments, a thickness T2 of an area of the electrode active material layer 120 that overlaps the metal lead 130 may be less (e.g., smaller) than a thickness T1 of an area of the electrode active material layer 120 that overlaps the electrode current collector 110.

In some embodiments, the metal lead 130 may include an uneven portion provided on the first region 132. For example, the electrode active material layer 120 may be more easily attached onto the metal lead 130 by the uneven portion.

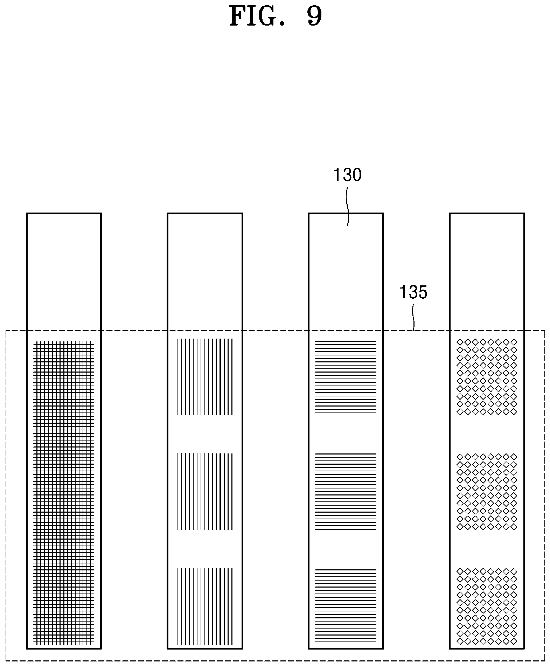

FIG. 9 is a plan view illustrating uneven portions of metal leads according to embodiments.

Referring to FIG. 9, for example, the shape of the uneven portion is not limited and may be circular, oval, polygonal, or triangular pyramid shape. For example, the height of the uneven portion 135 may be in a range of about 0.1 µm to about 10 µm, about 0.1 µm to about 7 µm, about 0.1 µm to about 5 µm, about 0.1 µm to about 3 µm, about 1 µm to about 10 µm, about 1 µm to about 7 µm, about 1 µm to about 5 µm, or about 1 µm to about 3 µm.

In embodiments, the area of the uneven portion135 may be 50% or more of the total area of the first region 132. For example, the area of the uneven portion135 may be in a range of about 50 % to about 99 %, about 60 % to about 99 %, about 70 % to about 99 %, or about 70 % to about 95 % of the total area of the first region 132.

In embodiments, a length L of the first region 132 of the metal lead 130 may be less than or equal to a width W (e.g., at most equal to a width W) of the current collector 110. Referring to FIGS. 1 and 3, the length L of the first region 132 of the metal lead 130 may be equal to the width W of the current collector 110. For example, the length L of the first region 132 of the metal lead 130 may be less (e.g., smaller) than the width W of the current collector 110.

In embodiments, the length L of the first region 132 of the metal lead 130 may be in a range of about 1 % to 100 %, about 5 % to about 90 %, about 10 % to about 80 %, about 10 % to about 70%, about 10 % to about 60 %, about 10 % to about 50 %, about 10 % to about 40 %, about 10 % to about 30 %, or about 10 % to about 20 % of the width W of the current collector 110.

In embodiments, the metal lead 130 may be, for example, a metal or an alloy thereof. The metal lead 130 may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

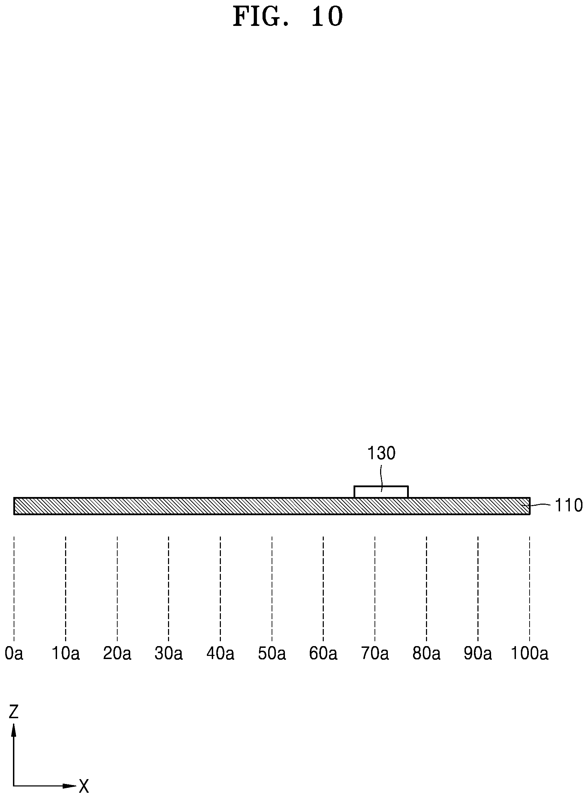

FIG. 10 is a schematic view illustrating a position at which a metal lead according to embodiments is provided on an electrode current collector.

Referring to FIG. 10, one end of an area in a longitudinal direction (X) of the electrode current collector may be defined as 0a, and another end of the area in a longitudinal direction (X) of the electrode current collector may be defined as 100a. In other words, in both (e.g., opposite) ends in the longitudinal (X) direction of the area of the electrode current collector 110, e.g., one (e.g., from a first) end and another (e.g., to a second or final) end are defined as 0a and 100a, respectively. In some embodiments, areas at regular intervals between the two ends are defined as 1a to 99a, and the metal lead 130 may be provided in at least one selected from among areas 1a to 99a (e.g., areas defined by 0a to 100a). For example, the metal lead 130 may be provided in areas 50a to 99a, areas 50a to 90a, or areas 60a-90a (e.g., areas or area defined by 65a and 75a in FIG. 10).

In some embodiments, in the electrode 100, the electrode current collector 110 may be provided, for example, on a portion of one side of the electrode active material layer 120 or a portion between both (e.g., opposite) sides thereof. By disposing the electrode current collector 100 on a portion of one side of the electrode active material layer 120 or a portion between both (e.g., opposite) sides thereof, the volume occupied by the electrode current collector 110 in the electrode may be reduced. The energy density of a lithium battery including an electrode having a reduced volume of the electrode current collector 110 may be then improved. Therefore, a lithium battery with improved output may be provided.

The electrode 100, in which the electrode current collector 110 is provided only on a portion of one surface or a portion between both (e.g., opposite) sides of the electrode active material layer 120, may be, for example, a stretchable electrode. The stretchable electrode may be stretchable in at least one direction selected from a longitudinal direction and a width direction. The stretchable electrode may be stretched by, for example, 5 % or more, 10 % or more, 15 % or more, 20 % or more, 30 % or more, 40 % or more, or 50 % or more in the longitudinal direction of the electrode. The stretchable electrode may be stretched by, for example, about 5 % to about 100 %, about 10 % to about 100 %, about 15 % to about 100 %, about 20 % to about 100 %, about 30 % to about 100 %, about 40 % to about 100 %, or about 50 % to about 100 % in the longitudinal direction of the electrode. The stretchable electrode may be stretched by, for example, 5 % or more, 10 % or more, 15 % or more, 20 % or more, 30 % or more, 40 % or more, or 50 % or more in the width direction of the electrode. The stretchable electrode may be stretched by, for example, about 5 % to about 100 %, about 10 % to about 100 %, about 15 % to about 100 %, about 20 % to about 100 %, about 30 % to about 100 %, about 40 % to about 100 %, or about 50 % to about 100 % in the width direction of the electrode. For example, the stretchable electrode may be restored to the original length thereof even after stretching without occurrence of cracks and/or the like in the electrode, and even if (e.g., when) this cycle is repeated a plurality of times, cracks and/or the like may not occur in the electrode.

In some embodiments, a material constituting the electrode current collector 110 may be any material that does not react with lithium and has conductivity (e.g., is a conductor), for example, a material that does not form an alloy or compound with lithium and has conductivity (e.g., is a conductor). A metal substrate, for example, a metal or an alloy, may be used for the electrode current collector 110. The metal substrate may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In embodiments, the electrode current collector 110 may have, for example, a shape selected from among a sheet, a foil, a film, a plate, a porous body, a mesoporous body, a through-hole-containing body, a polygonal ring body, a mesh body, a foam, and a non-woven fabric. However, the present disclosure is not limited to these shapes and any shape utilized in the art is possible.

The electrode current collector 110 may have a reduced thickness compared to an electrode current collector included in an existing or comparable electrode. Thus, the electrode according to the present disclosure may include, for example, a thin-film current collector, which is distinguished from an existing electrode including a thick-film current collector. By employing a thin-film current collector having a reduced thickness in the electrode according to one or embodiments, the thickness of the electrode active material layer may be relatively increased in the electrode including a thin-film current collector. As a result, a lithium battery employing such an electrode may have increased energy density. The thickness of the electrode current collector 110 including a metal substrate and an interlayer may be, for example, less than 15 µm, 14.5 µm or less, or 14 µm or less. The thickness of the electrode current collector 110 may be, for example, in a range of about 0.1 µm to less than about 15 µm, about 1 µm to about 14.5 µm, about 2 µm to about 14 µm, about 3 µm to about 14 µm, about 5 µm to about 14 µm, or about 10 µm to about 14 µm.

In some embodiments, the electrode current collector 110 may include, for example, a base film and a metal layer provided on at least one side (e.g., one or both (e.g., opposite) sides) of the base film. The electrode current collector 110 may include a substrate, and the substrate may have, for example, a structure including a base film and a metal layer provided on at least one side (e.g., one or both (e.g., opposite) sides) of the base film. The described interlayer may be further provided on the metal layer. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. By inclusion of the thermoplastic polymer in the base film, the base film may melt if (e.g., when) a short circuit occurs, thus suppressing a rapid increase in current. The base film may be, for example, an insulator. The metal layer may include, for example, copper (Cu), stainless steel, titanium (Ti), iron (Fe), cobalt (Co), nickel (Ni), or an alloy thereof. The metal layer acts as an electrochemical fuse and may be cut in the event of overcurrent, thereby performing a short-circuit prevention function. The limit current and the maximum current may be adjusted by adjusting the thickness of the metal layer. The metal layer may be plated or deposited on the base film. If (e.g., when) the thickness of the metal layer is reduced, the limit current and/or the maximum current of the electrode current collector 110 may be reduced, and thus, the stability of the lithium battery in the event of short circuit may be improved. A lead tab may be further provided on the metal layer for connection to the outside. The lead tab may be welded to the metal layer or a metal layer/base film stack by ultrasonic welding, laser welding, spot welding, and/or the like. The metal layer may be electrically connected to the lead tab while the base film and/or the metal layer is melted during welding. To make welding between the metal layer and the lead tab more rigid, a metal chip may be further provided between the metal layer and the lead tab. The metal chip may be foil of the same material as a metal of the metal layer. The metal chip may be, for example, metal foil or metal mesh. The metal chip may be, for example, aluminum foil, copper foil, or SUS foil. The lead tab may be welded to a metal chip/metal layer stack or a metal chip/metal layer/base film stack after the metal chip is arranged on the metal layer. The metal layer or the metal layer/metal chip stack may be electrically connected to the lead tab while the base film, the metal layer, and/or the metal chip are melted during welding. A metal chip and/or a lead tab may be further provided on a portion of the metal layer. The base film may have a thickness of, for example, about 1 µm to about 50 µm, about 1.5 µm to about 50 µm, about 1.5 µm to about 40 µm, or about 1 µm to about 30 µm. If (e.g., when) the thickness of the base film is within the described range, the weight of an electrode assembly may be more effectively reduced. The base film may have a melting point of, for example, about 100 °C to about 300 °C, about 100 °C to about 250 °C, or about 100 °C to about 200 °C. If (e.g., when) the melting point of the base film is within the described range, the base film may be melted and easily coupled to the lead tab in the lead tab welding process. Surface treatment such as corona treatment may be performed on the base film to improve the adhesion between the base film and the metal layer. The metal layer may have a thickness of, for example, about 0.01 µm to about 3 µm, about 0.1 µm to about 3 µm, about 0.1 µm to about 2 µm, or about 0.1 µm to about 1 µm. If (e.g., when) the thickness of the metal layer is within the described range, the stability of an electrode assembly may be secured while maintaining conductivity. The metal chip may have a thickness of, for example, about 2 µm to about 10 µm, about 2 µm to about 7 µm, or about 4 µm to about 6 µm. If (e.g., when) the thickness of the metal chip is within the described range, connection between the metal layer and the lead tab may be more facilitated. If (e.g., when) the electrode current collector 110 has this structure, the weight of the electrode may be reduced, resulting in improved energy density. The electrode current collector 110 may be, for example, a cathode current collector. The electrode current collector 110 may be, for example, an anode current collector.

The dry electrode 100 may further include an interlayer provided between the electrode active material layer 120 and the electrode current collector 110.

The interlayer may be provided directly on, for example, on at least one side (e.g., one or both (e.g., opposite) sides) of the electrode current collector 110. Therefore, another layer may not be provided between the electrode current collector 110 and the interlayer. By disposing the interlayer directly on at least one side (e.g., one or both (e.g., opposite) sides) of the electrode current collector 110, the adhesion between the substrate and the electrode active material layer 120 may be further improved.

The thickness of the interlayer may be, for example, 30 % or less of the thickness of the electrode current collector 110. The thickness of the interlayer may be, for example, in a range of about 0.01 % to about 30 %, about 0.1 % to about 30 %, about 0.5 % % to about 30 %, about 1 % to about 25 %, about 1 % to about 20 %, about 1 % to about 15 %, about 1 % to about 10 %, about 1 % to about 5 %, or about 1 % to about 3 % of the thickness of the electrode current collector. The thickness of the interlayer may be, for example, in a range of about 10 nm to about 5 µm, about 50 nm to about 5 µm, about 200 nm about 4 µm, about 500 nm to about 3 µm, about 500 nm to about 2 µm, about 500 nm to about 1.5 µm or about 700 nm to about 1.3 µm. If (e.g., when) the thickness of the interlayer is within the described range, the adhesion between the electrode current collector 110 and the electrode active material layer 120 may be further improved, and an increase in interfacial resistance may be suppressed or reduced.

The interlayer may include, for example, a binder. By inclusion of a binder in the interlayer, the adhesion between the electrode current collector and the electrode active material layer may be further improved. The binder included in the interlayer may be, for example, a conductive binder or a non-conductive binder.

The conductive binder may be, for example, an ion-conducting binder and/or an electronically-conducting binder. A binder having both (e.g., simultaneously) ionic conductivity and electronic conductivity may belong to both (e.g., simultaneously) an ion-conducting binder and an electronically-conducting binder.

Non-limiting examples of the ion-conducting binder may include polystyrene sulfonate (PSS), a polyvinylidene fluoride-hexafluoropropylene (PVDF-HFP) copolymer, polyvinyl fluoride (PVF), polyvinylidene fluoride (PVDF), poly(methylmethacrylate (PMMA), polyethylene oxide (PEO), polyethylene glycol (PEG), polytetrafluoroethylene (PTFE), polyethylenedioxythiophene (PEDOT), polypyrrole (PPY), polyacrylonitrile (PAN), polyaniline, and/or polyacetylene. The ion-conducting binder may contain a polar functional group. Non-limiting examples of the ion-conducting binder containing a polar functional group may include Nafion, Aquivion, Flemion, Gore, Aciplex, Morgane ADP, sulfonated poly(ether ether ketone (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi⁺). Non-limiting examples of the electronically-conducting binder may include polyacetylene, polythiophene, polypyrrole, poly(p-phenylene), poly(phenylenevinylene), poly(phenylenesulfide), and/or polyaniline. The interlayer may be, for example, a conductive layer including a conductive polymer.

The binder included in the interlayer may be selected from, for example, binders included in the electrode active material layer. The interlayer may include the same binder as the electrode active material layer. The binder included in the interlayer may be, for example, a fluorine-based binder. The fluorine-based binder included in the interlayer may be, for example, polyvinylidene fluoride (PVDF). The interlayer may be provided on the electrode current collector, for example, in a dry or wet manner. The interlayer may be, for example, a binding layer including a binder.

The interlayer may further include, for example, a carbon-based conductive material. The carbon-based conductive material included in the interlayer may be selected from carbon-based conductive materials included in the electrode active material layer. The interlayer may include the same carbon-based conductive material as the electrode active material layer. If (e.g., when) the interlayer includes a carbon-based conductive material, the interlayer may be, for example, a conductive layer. The interlayer may be, for example, a conductive layer including a binder and a carbon-based conductive material.

The interlayer may be provided on the electrode current collector in a dry manner, for example, by deposition such as CVD or PVD. The interlayer may be provided on the electrode current collector in a wet manner, for example, by spin coating, dip coating, and/or the like. For example, the interlayer may be provided on the electrode current collector by depositing a carbon-based conductive material on the electrode current collector. The dry-coated interlayer may include a carbon-based conductive material and may not include (e.g., may exclude) a binder. In other embodiments, the interlayer may be provided on the electrode current collector by, for example, coating a composition including a carbon-based conductive material, a binder, and a solvent onto a surface of the electrode current collector and drying the coated composition. The interlayer may have a single-layered structure or a multi-layered structure including a plurality of layers.

A lithium battery according to one or more embodiments may include: a cathode; an anode; and an electrolyte provided between the cathode and the anode, and at least one of the cathode and the anode may be the electrode 100. By inclusion of the electrode 100 described herein in the lithium battery, the cycle characteristics of the lithium battery may be improved.

The lithium battery may be manufactured by, for example, the following methods. However, the present disclosure is not limited to these methods and the methods vary depending on required conditions.

First, the electrode 100 described herein may be manufactured. For example, the electrode 100 may be manufactured by preparing the electrode current collector 100, and then attaching the metal lead 130 onto the electrode current collector 100. Subsequently, the electrode active material layer 120 may be provided on the electrode current collector 100. In some embodiments, the electrode active material layer 120 may more easily cover at least a portion of the side surface A of the first region 132 of the metal lead 130.

In other embodiments, one of the cathode and the anode may be the electrode 100 described herein, and the other electrode may be an electrode manufactured by a wet manufacturing method. For example, the other electrode may be manufactured by preparing an electrode slurry including an electrode active material, a conductive material, a binder, and a solvent, coating the prepared electrode slurry onto an electrode current collector, and drying the coated electrode slurry. The conductive material and the binder included in the electrode manufactured in a wet manner may be selected from conductive materials and binders utilized in the manufacture of the described dry electrode.

Next, a separator to be inserted between the cathode and the anode may be prepared.

Any separator commonly utilized in lithium batteries may be utilized. The separator may be, for example, a separator having low resistance to migration of ions in an electrolyte and an excellent or suitable electrolyte-retaining ability. The separator may be selected from, for example, glass fiber, polyester, Teflon, polyethylene, polypropylene, polytetrafluoroethylene (PTFE), and a combination thereof, each of which is in a nonwoven fabric or woven fabric form. For example, a rollable separator including polyethylene, polypropylene, and/or the like may be utilized for a lithium ion battery, and a separator having an excellent or suitable organic electrolyte solution-impregnating ability may be utilized for a lithium ion polymer battery.

The separator may be manufactured utilizing the following methods, but the present disclosure is not limited thereto, and the methods may be adjusted depending on required conditions.

First, a polymer resin, a filler, and a solvent may be mixed together to prepare a separator composition. The separator composition may be directly coated onto an electrode, and then dried to fabricate the separator. In some embodiments, the separator composition may be cast onto a support and dried, and then a separator film separated from the support may be laminated on an electrode, thereby completing the fabrication of a separator.

A polymer utilized to manufacture the separator is not limited, and any polymer utilized in a binder of an electrode plate may be utilized. Non-limiting examples of the polymer include a vinylidenefluoride/hexafluoropropylene copolymer, polyvinylidene fluoride (PVDF), polyacrylonitrile, polymethylmethacrylate, and/or a mixture thereof.

Next, an electrolyte may be prepared.

The electrolyte may be, for example, a liquid electrolyte, a solid electrolyte, a gel electrolyte, and/or a combination thereof.

The electrolyte may be, for example, an organic electrolyte solution. The organic electrolyte solution may be prepared by, for example, dissolving a lithium salt in an organic solvent.

The organic solvent may be any organic solvent utilized in the art. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethylsulfoxide, dioxane, 1,2-dimethoxyethane, sulfolane, dichloroethane, chlorobenzene, nitrobenzene, diethylene glycol, dimethyl ether, a mixture thereof, and/or the like.

The lithium salt may be any lithium salt utilized in the art. Non-limiting examples of the lithium salt include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) where 1≤x≤20 and 1≤y≤20, LiCl, Lil, and/or a mixture thereof. The concentration of the lithium salt may be, for example, in a range of about 0.1 M to about 5.0 M.

The solid electrolyte may be, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may be at least one selected from among Li_{1+x+y}AlₓTi₂₋ₓSi_{y}P_{3-y}O₁₂ where 0<x<2 and 0≤y<3, BaTiO₃, Pb(Zr,Ti)O₃(PZT), Pb₁₋ₓLaₓZr_{1-y}Ti_{y}O₃(PLZT) where 0≤x<1 and 0≤y<1, Pb(Mg_{1/3}Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ where 0<x<2 and 0<y<3, LiₓAl_{y}Ti_{z}(PO₄)₃ where 0<x<2, 0<y<1, and 0<z<3, Li_{1+x+y}(Al, Ga)ₓ(Ti, Ge)₂₋ₓSi_{y}P_{3-y}O₁₂ where 0≤x≤1 and 0≤y≤1, LiₓLa_{y}TiO₃ where 0<x<2 and 0<y<3, Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ where M = Te, Nb, or Zr, and x is an integer from 1 to 10. The solid electrolyte may be prepared by a sintering method and/or the like. For example, the oxide-based solid electrolyte may be a garnet-type or kind solid electrolyte selected from among Li₇La₃Zr₂O₁₂(LLZO) and Li₃₊ₓLa₃Zr₂₋ₐMₐO₁₂ (M= doped LLZO, M=Ga, W, Nb, Ta, or Al, and x is an integer from 1 to 10, 0<a<2).

The sulfide-based solid electrolyte may include, for example, lithium sulfide, silicon sulfide, phosphorus sulfide, boron sulfide, or a combination thereof. Sulfide-based solid electrolyte particles may include Li₂S, P₂S₅, SiS₂, GeS₂, B₂S₃, or a combination thereof. The sulfide-based solid electrolyte particles may be Li₂S or P₂S₅. Sulfide-based solid electrolyte particles are suitable to have higher lithium ion conductivity than other inorganic compounds. For example, the sulfide-based solid electrolyte may include Li₂S and/or P₂S₅. If (e.g., when) a sulfide solid electrolyte material constituting the sulfide-based solid electrolyte includes Li₂S-P₂S₅, a mixing molar ratio of Li₂S to P₂S₅ may be, for example, in a range of about 50:50 to about 90:10. In other embodiments, an inorganic solid electrolyte prepared by adding Li₃PO₄, a halogen, a halogen compound, Li₂₊₂ₓZn₁₋ₓGeO₄ ("LISICON", 0≤x<1), Li_{3+y}PO₄₋ₓNₓ("LIPON") where 0<x<4 and 0<y<3, Li_{3.25}Ge_{0.25}P_{0.75}S₄ ("ThioLISICON"), Li₂O-Al₂O₃-TiO₂-P₂O₅ ("LATP"), and/or the like to an inorganic solid electrolyte such as Li₂S-P₂S₅, SiS₂, GeS₂, B₂S₃, or a combination thereof may be utilized as a sulfide solid electrolyte. Non-limiting examples of a sulfide solid electrolyte material include: Li₂S-P₂S₅; Li₂S-P₂S₅-LiX (X= a halogen element); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S -P₂S₅-ZₘSₙ where 0<m<10, 0<n<10, and Z=Ge, Zn, or Ga; Li₂S-GeS₂; Li₂S-SiS₂-Li₃PO₄; and/or Li₂S-SiS₂-LiₚMO_{q} where 0<p<10, 0<q<10, and M=P, Si, Ge, B, Al, Ga, or In. In this regard, the sulfide-based solid electrolyte material may be prepared by processing a raw starting material of the sulfide-based solid electrolyte material (e.g., Li₂S, P₂S₅ and/or the like) by a melt quenching method, a mechanical milling method, and/or the like. In other embodiments, calcinations may be performed after the treatment. The sulfide-based solid electrolyte may be amorphous or crystalline, or in a mixed state.

The polymer solid electrolyte may be, for example, an electrolyte including a mixture of a lithium salt and a polymer or a polymer having an ion-conducting functional group. The polymer solid electrolyte may be, for example, a polymer electrolyte that does not include a liquid electrolyte. Examples of the polymer included in the polymer solid electrolyte include, but are not limited to, for example, polyethylene oxide (PEO), polyvinylidene fluoride (PVDF), vinylidene fluoride-hexafluoropropylene copolymer(PVDF-HFP), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethyleneoxide-styrene) block copolymer, polyvinyl fluoride (PVF), polymethyl methacrylate (PMMA), polyethylene glycol (PEG), polyacrylonitrile ( PAN), polytetrafluoroethylene (PTFE), polyethylenedioxythiophene (PEDOT), polypyrrole (PPY), polyacrylonitrile (PAN), polyaniline, polyacetylene, Nafion, Aquivion , Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)], (SPBIBI), poly(styrene sulfonate) (PSS), lithium 9,10-diphenylanthracene-2-sulfonate (DPASLi⁺), or a combination thereof, and any solid electrolyte utilized in the art may be utilized. The lithium salt may be any lithium salt that may be utilized in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) where x and y are each 1 to 20, LiCI, Lil, or a mixture thereof.

The gel electrolyte may be, for example, a gel polymer electrolyte. The gel polymer electrolyte may be, for example, an electrolyte including a liquid electrolyte and a polymer or an organic solvent and a polymer having an ion-conducting functional group. The liquid electrolyte may be, for example, an ionic liquid, a mixture of a lithium salt and an organic solvent, a mixture of an ionic liquid and an organic solvent, or a mixture of a lithium salt, an ionic liquid, and an organic solvent. The polymer may be selected from the polymers utilized in the solid polymer electrolyte. The organic solvent may be selected from organic solvents utilized in the liquid electrolyte. The lithium salt may be selected from the lithium salts utilized in the solid polymer electrolyte. The ionic liquid may refer to a salt in a liquid state at room temperature or a room temperature molten salt that has a melting point room temperature and consists only of ions. The ionic liquid may include, for example, at least one selected from among compounds including: a) at least one cation selected from among an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br, I-, BF₄⁻, SO₄²⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. The polymer may be impregnated into an electrolyte solution in a lithium battery, thereby providing a gel polymer electrolyte. The gel electrolyte may further include inorganic particles.

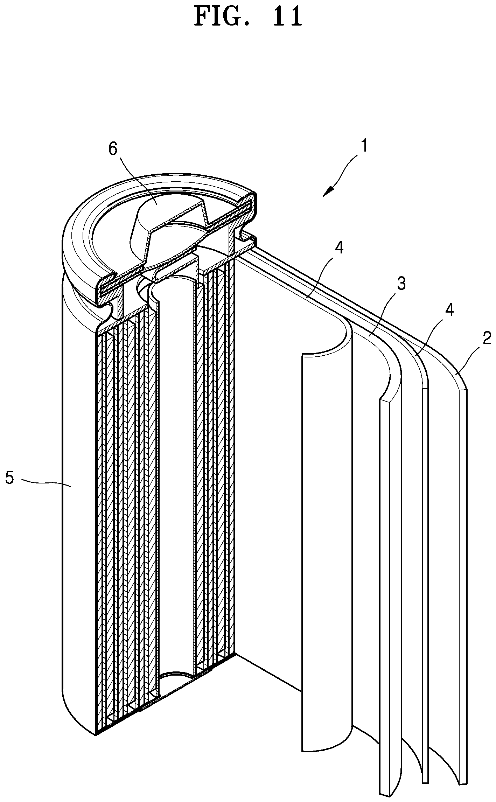

Referring to FIG. 11, a lithium battery 1 according to one or more embodiments includes a cathode 3, an anode 2, and a separator 4. The cathode 3, the anode 2, and the separator 4 may be wound or folded to form a battery structure. The formed battery structure may be accommodated in a battery case 5. An organic electrolyte solution may be injected into the battery case 5 and sealed with a cap assembly 6 to thereby complete the manufacture of the lithium battery 1. The battery case 5 may be in a cylindrical form, but the present disclosure is not limited to this shape. For example, the battery case 5 may be in the form of a rectangle, a thin film, and/or the like.

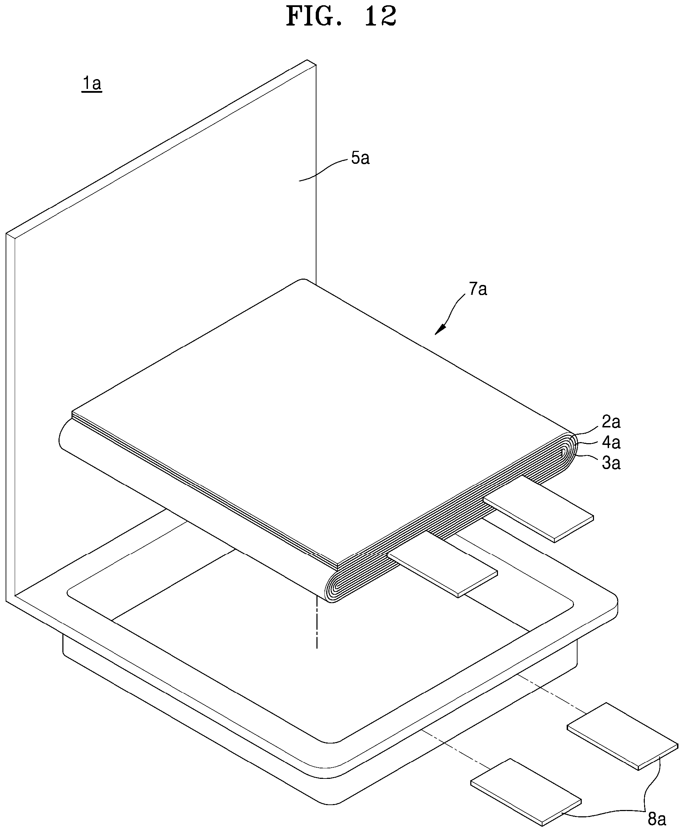

Referring to FIG. 12, the lithium battery 1a according to one or more embodiments includes the cathode 3a, the anode 2a, and the separator 4a. The separator 4a may be provided between the cathode 3a and the anode 2a, and the cathode 3a, the anode 2a, and the separator 4a may be wound or folded to form the battery structure 7a. The formed battery structure 7a may be accommodated in the battery case 5a. The lithium battery 1a may include an electrode tab 8a that serves as an electrical passage for guiding current formed in the battery structure 7a to the outside. An organic electrolyte solution may be injected into the battery case 5a and sealed to thereby complete the manufacture of the lithium battery 1a. The battery case 5a may be in a rectangular form, but the present disclosure is not limited to this shape. For example, the battery case 5a may be in the form of a cylinder, a thin film, and/or the like.

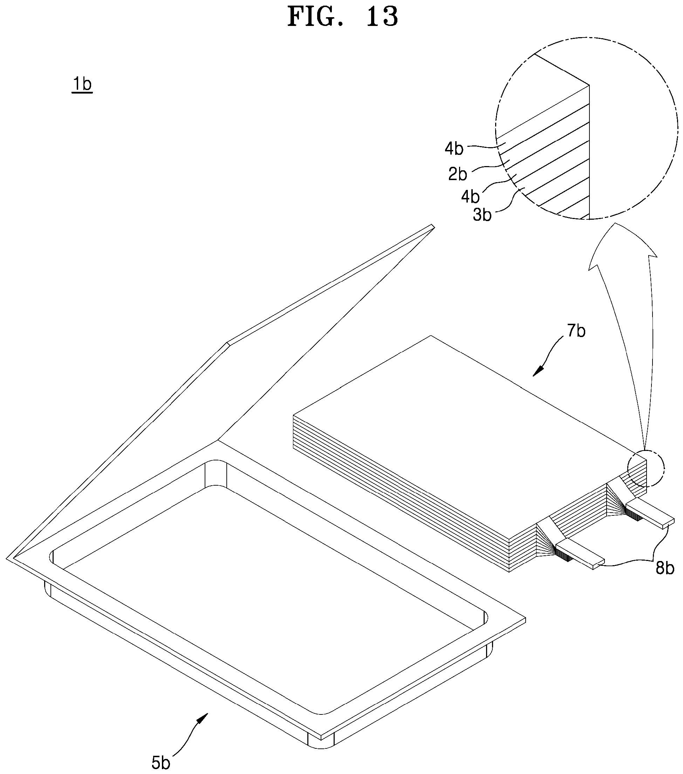

Referring to FIG. 13, the lithium battery 1b according to one or more embodiments includes the cathode 3b, the anode 2b, and the separator 4b. The separator 4b may be provided between the cathode 3b and the anode 2b to form the battery structure 7b. The battery structure 7b may be stacked in a bi-cell structure, and then accommodated in the battery case 5b. The lithium battery 1b may include an electrode tab 8b that serves as an electrical passage for guiding current formed in the battery structure 7b to the outside. An organic electrolyte solution may be injected into the battery case 5b and sealed to thereby complete the manufacture of the lithium battery 1b. The battery case 5b may be in a rectangular form, but the present disclosure is not limited to this shape. For example, the battery case 5b may be in the form of a cylinder, a thin film, and/or the like.

Pouch-type or kind lithium batteries correspond to the secondary batteries of FIGS. 11 to 13, except that pouches are utilized as the battery cases. A pouch-type or kind secondary battery may include at least one battery structure. A separator may be provided between a cathode and an anode to form a battery structure. The battery structure may be stacked in a bi-cell structure, and then impregnated with an organic electrolyte solution, and accommodated in a pouch and sealed to thereby complete the manufacture of a pouch-type or kind lithium battery. For example, although not shown in the drawing, the described cathode, anode and separator may be simply stacked and accommodated in a pouch in the form of an electrode assembly, or may be wound or folded into a jelly roll-type or kind electrode assembly, and then accommodated in a pouch. Subsequently, an organic electrolyte solution may be injected into the pouch and sealed to thereby complete the manufacture of a lithium battery.

Lithium batteries have excellent or suitable lifespan characteristics and high-rate characteristics, and may be utilized, for example, in electric vehicles (EVs). For example, lithium batteries may be utilized in hybrid vehicles such as plug-in hybrid electric vehicles (PHEVs). In other embodiments, lithium batteries may be utilized in fields that require large amounts of power storage. For example, lithium batteries may be utilized in electric bicycles, power tools, and/or the like.

A plurality of lithium batteries may be stacked to form a battery module, and a plurality of battery modules may form a battery pack. These battery packs may be utilized in all devices that require high capacity and high output. For example, battery packs may be utilized in laptops, smartphones, electric vehicles, and/or the like. A battery module may include, for example, a plurality of batteries and a frame that holds the plurality of batteries. A battery pack may include, for example, a plurality of battery modules and a bus bar connecting the plurality of battery modules. The battery module and/or the battery pack may further include a cooling device. A plurality of battery packs may be controlled or selected by a battery management system. The battery management system may include a battery pack and a battery control device connected to the battery pack.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The present disclosure will be described in further detail with reference to the following examples and comparative examples. However, these examples are provided for illustrative purposes only and are not intended to limit the scope of the present disclosure.

### EXAM PLES

### Manufacture of lithium battery

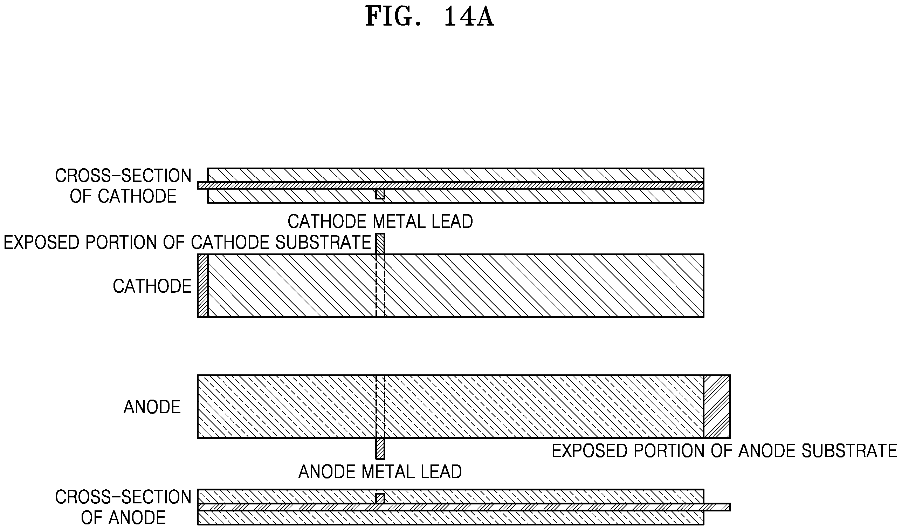

### Example 1: Metal lead arrangement referring to FIG. 14A

### Manufacture of cathode film

LiNi_{0.91}Co_{0.05}Al_{0.04}O₂ (hereinafter referred to as NCA91) as a dry cathode active material, a carbon conductive material (Denka Black) as a dry conductive material, and polytetrafluoroethylene (PTFE) as a dry binder were added into a blade mixer in a weight ratio of 93:4:3, followed by first dry mixing at 25 °C and a speed of 900 rpm for 10 minutes, to prepare a first mixture in which the dry cathode active material, the dry conductive material, and the dry binder were uniformly mixed. Subsequently, to allow fibrillization of the dry binder to proceed, the first mixture was further subjected to second mixing at 25 °C and a speed of 4,800 rpm for 20 minutes to prepare a second mixture. No separate solvent was utilized in the preparation of the first mixture and the second mixture.

Referring to FIG. 8, the second mixture was added between a pair of calender rolls of a rolling device and calendered to fabricate a dry cathode active material layer sheet. The fabricated dry cathode active material layer sheet was cut at regular intervals to prepare dry cathode films. Each of the dry cathode films included a dry binder fibrillized in the machine direction (MD). The dry cathode films were each a self-standing film without a support, had a square shape, and had the same thickness.

### Manufacture of anode film

An anode film was fabricated by utilizing the same method as that utilized for fabricating the cathode film, except that, in the fabrication of the cathode film, a mixture of a graphite material and a silicon-based material was utilized as a dry anode active material.

### Manufacture of cathode

Aluminum metal was welded to a 12 micrometer (µm)-thick aluminum thin film, as a metal lead referring to FIG. 14A. Subsequently, a cathode current collector in which a carbon layer was provided as a coating layer on one side of the aluminum thin film was prepared. The aluminum thin-film coating layer may be also considered an interlayer.

The carbon layer was prepared by coating a composition including a carbon conductive material (Denka black) and polyvinylidene fluoride (PVDF) onto an aluminum thin film, and then drying the coated composition. The thickness of the carbon layer provided on both side (e.g., an upper surface and a lower surface B) of the aluminum thin film was about 1 µm.

A dry cathode film was placed on both side of the cathode current collector on which the carbon layer was provided, and then rolled to manufacture a cathode in which an interlayer and a cathode active material layer were sequentially provided on the cathode current collector. The thickness of the cathode active material layer was about 100 µm.

### Manufacture of anode

An anode was manufactured by utilizing the same method as that utilized for manufacturing the cathode, except that copper metal was welded to a 12 µm-thick copper thin film, as a metal lead referring to FIG. 14A, and then an anode film was placed on the copper thin film to thereby complete the manufacture of the anode.

### Manufacture of lithium battery

The manufactured cathode and anode, a PTFE separator, and a solution as an electrolyte prepared by dissolving 1.15 M LiPF₆ in ethylene carbonate (EC) + ethyl methyl carbonate (EMC) + dimethyl carbonate (DMC) in a volume ratio of 3:4:3 were utilized to manufacture a coin cell.

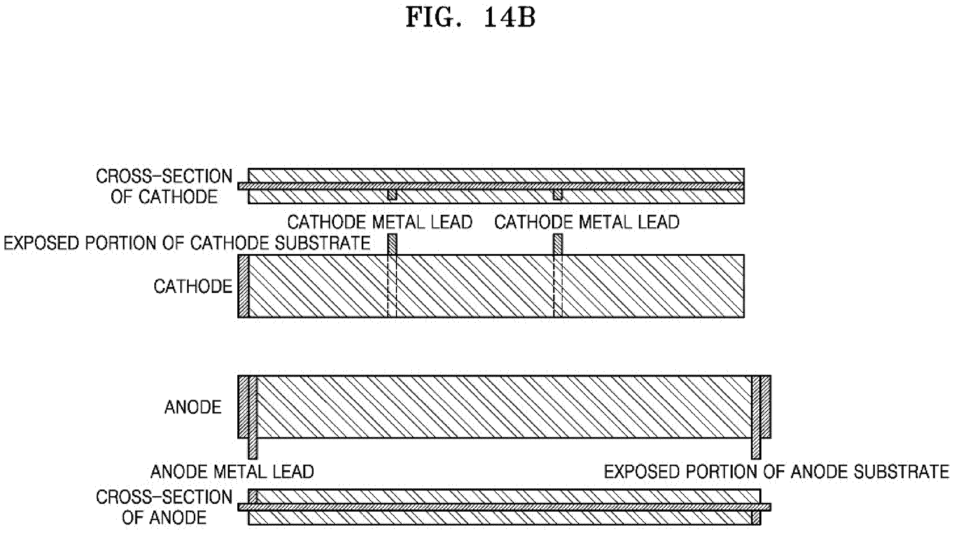

### Example 2: Metal lead arrangement referring to FIG. 14B

A lithium battery was manufactured in substantially the same manner as in Example 1, except that metal leads were arranged in a cathode and an anode, referring to FIG. 14B.

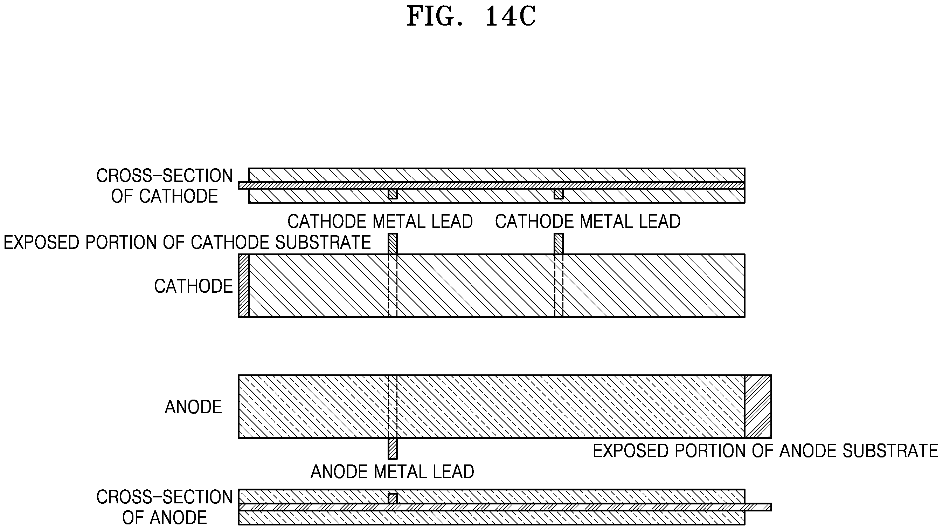

### Example 3: Metal lead arrangement referring to FIG. 14C

A lithium battery was manufactured in substantially the same manner as in Example 1, except that metal leads were arranged in a cathode and an anode, referring to FIG. 14C.

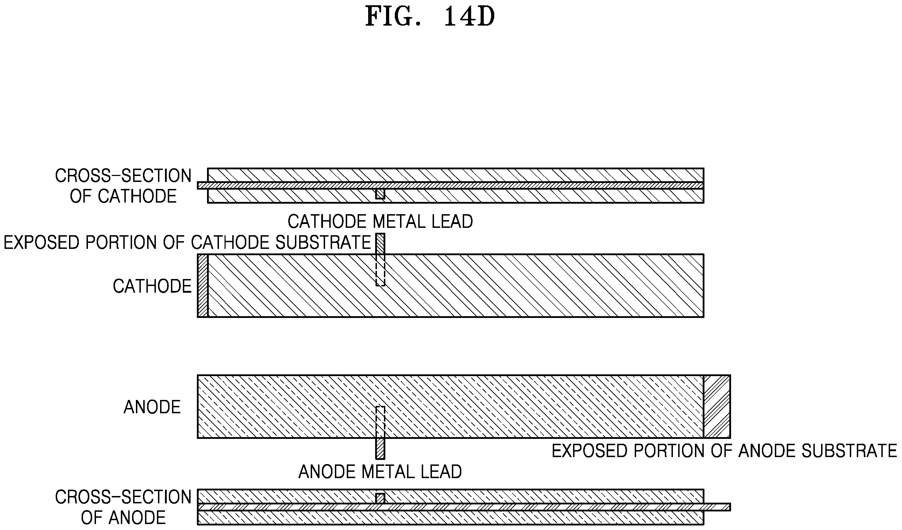

### Example 4: Metal lead arrangement referring to FIG. 14D

A lithium battery was manufactured in substantially the same manner as in Example 1, except that metal leads were arranged in a cathode and an anode, referring to FIG. 14D.

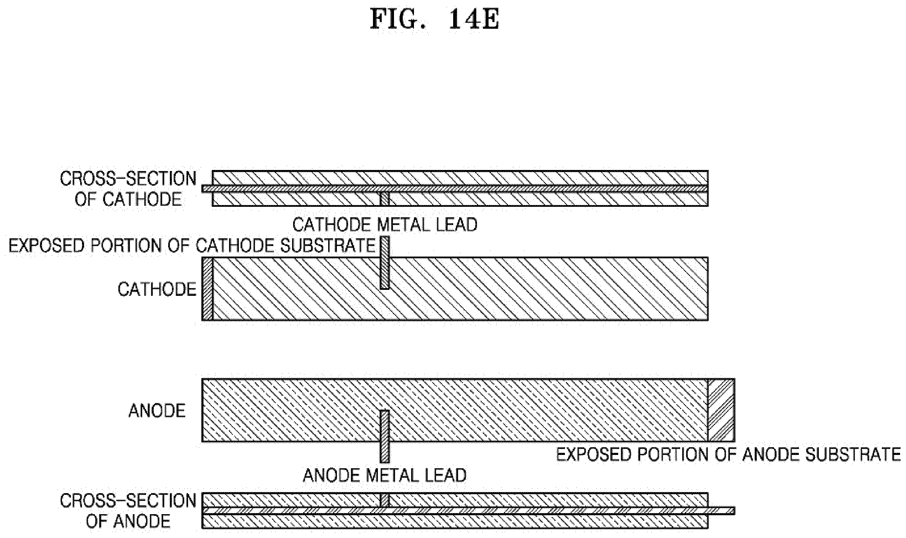

### Example 5: Metal lead arrangement referring to FIG. 14E

A lithium battery was manufactured in substantially the same manner as in Example 1, except that metal leads were arranged in a cathode and an anode, referring to FIG. 14E.

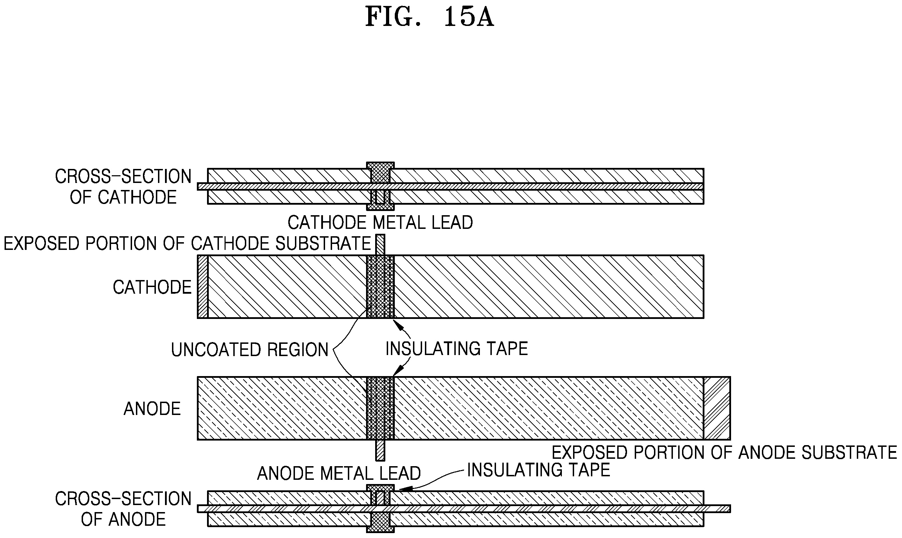

### Comparative Example 1: Arrangement of metal leads and insulating tapes referring to FIG. 15A

A lithium battery was manufactured in substantially the same manner as in Example 1, except that metal leads and insulating tapes were arranged in a cathode and an anode, referring to FIG. 15A.

The cathode is prepared by placing a dry cathode film on the aluminum thin film excluding uncoated region, welding aluminum metal as metal leads on the uncoated region, and attaching an insulating tape to cover both the metal leads and the uncoated region. The anode is prepared by placing a anode film on the copper thin film excluding uncoated region, welding copper metal as metal leads on the uncoated region, and attaching a insulating tape to cover both the metal leads and the uncoated region.

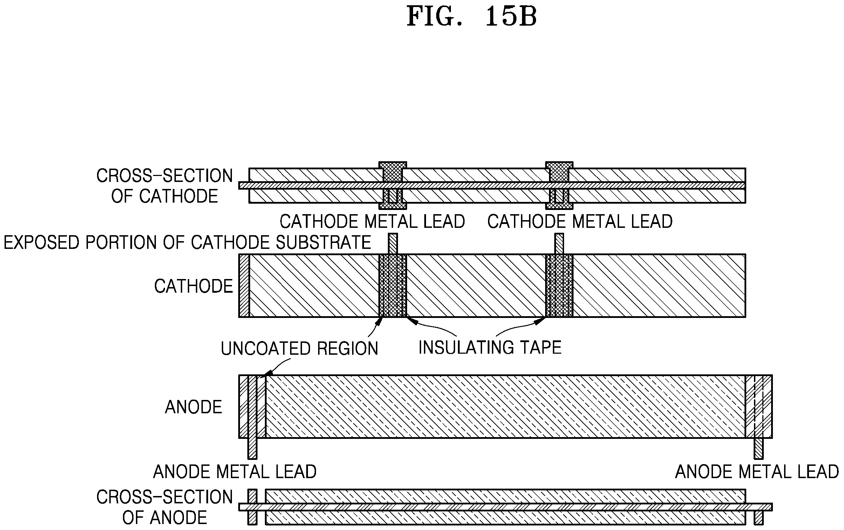

### Comparative Example 2: Arrangement of metal leads and insulating tapes referring to FIG. 15B

A lithium battery was manufactured in substantially the same manner as in Comparative Example 1, except that metal leads and insulating tapes were arranged in a cathode and an anode, referring to FIG. 15B.

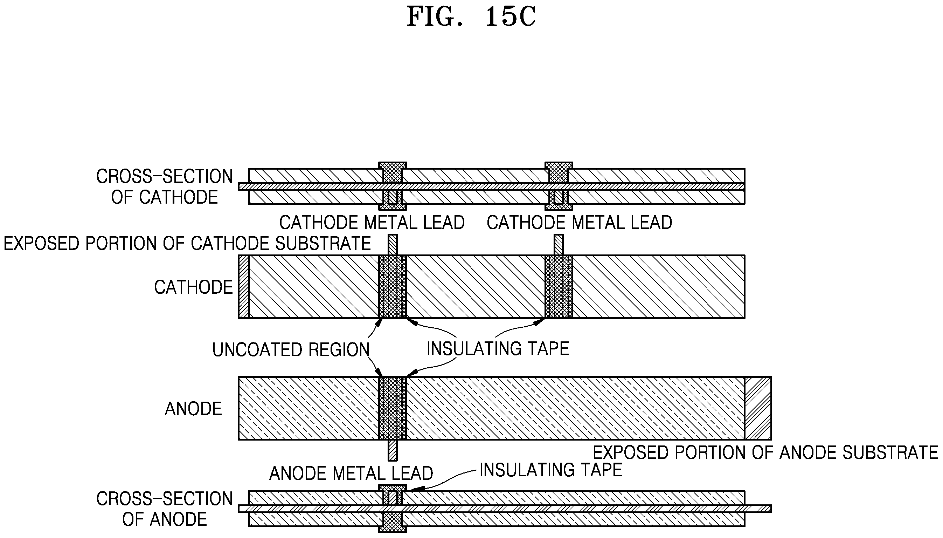

### Comparative Example 3: Arrangement of metal leads and insulating tapes referring to FIG. 15C

A lithium battery was manufactured in substantially the same manner as in Comparative Example 1, except that metal leads and insulating tapes were arranged in a cathode and an anode, referring to FIG. 15C.

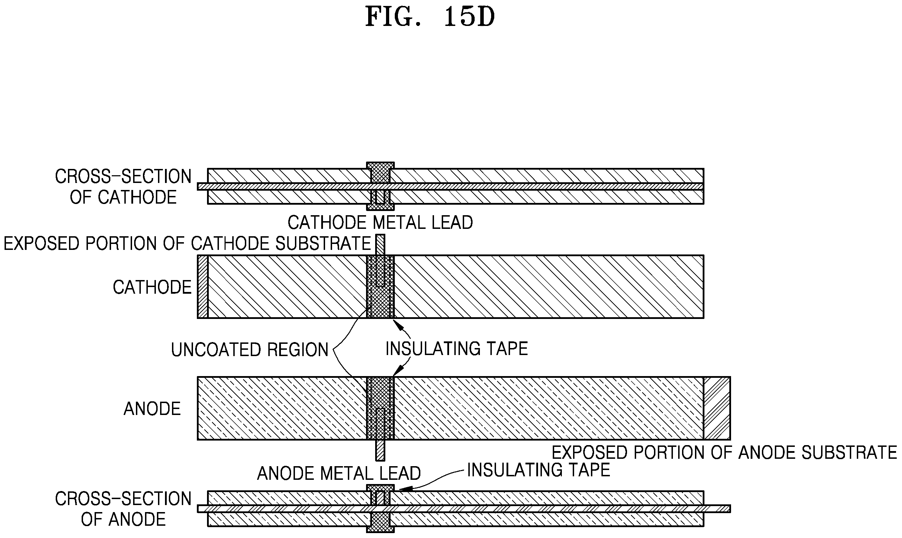

### Comparative Example 4: Arrangement of metal leads and insulating tapes referring to FIG. 15D

A lithium battery was manufactured in substantially the same manner as in Comparative Example 1, except that metal leads and insulating tapes were arranged in a cathode and an anode, referring to FIG. 15D.

### Evaluation Example 1: Energy density evaluation

The energy density of each of the lithium batteries manufactured according to Examples 1 to 5 and Comparative Examples 1 to 4 was measured. The measurement results thereof are shown in Table 1.

The energy density was calculated by Equation 1. Energy density (ampere-hour per liter (Ah/L)) = [(areal capacity of cathode/total thickness of cell) × average voltage]

The areal capacity (milliampere-hour per square centimeter (mAh/cm²)) in Equation 1 was calculated from a value obtained by dividing the total current passing through the batteries by the geometric area of the electrodes of the batteries.

### Evaluation Example 2: Battery capacity evaluation

The capacity characteristics of each of the batteries of Examples 1 to 5 and Comparative Examples 1 to 4 were evaluated, and the results thereof are shown in Table 1.

The battery capacity characteristics were evaluated by utilizing a charger/discharger, charging was performed under CC-CV 0.5 C, 4.3 V, 0.05 C cutoff conditions, discharging was performed under CC 0.7C, 3.0 V cutoff conditions, and the capacity (milliampere-hour (mAh)) of each battery was confirmed under 0.2 C, 3.0 V cutoff conditions every 50 cycles.

**Table 1**

| | Cell capacity (mAh) | Energy density (Ah/L) |
|---|---|---|
| Example 1 | 5,184 | 772 |
| Example 2 | 5,116 | 762 |
| Example 3 | 5,198 | 774 |
| Example 4 | 5,189 | 773 |
| Example 5 | 5,169 | 770 |
| Comparative Example 1 | 5,027 | 748 |
| Comparative Example 2 | 5,015 | 747 |
| Comparative Example 3 | 5,002 | 745 |
| Comparative Example 4 | 5,010 | 746 |

Referring to Table 1, in each of the batteries of Examples 1 to 5, in which the electrode active material layer covered at least a portion of the side surface A of the first region of the metal lead, exhibited enhanced cell capacity and energy density, compared to the batteries of Comparative Examples 1 to 4 including insulating tapes, and metal lead separated from the electrode active material layer.

## Claims

1. An electrode (100) comprising:
an electrode current collector (110);
a metal lead (130) comprising a first region (132) on the electrode current collector (110) and a second region (131) protruding outward from the electrode current collector (110); and
an electrode active material layer (120) on the electrode current collector (110),
wherein the electrode active material layer (120) covers at least a portion of a side surface A (A1, A2, A3) of the first region (132) of the metal lead (130).

2. The electrode (100) as claimed in claim 1, wherein the side surface A (A1, A2, A3) of the first region (132) of the metal lead (130) directly contacts the electrode active material layer (120).

3. The electrode (100) as claimed in claim 1 or 2, wherein the electrode active material layer (120) is a dry electrode film, and
wherein the dry electrode film is a self-standing film, and is free of a residual processing solvent.

4. The electrode (100) as claimed in claim 3, wherein the dry electrode film comprises a dry electrode active material and a dry binder, and
wherein the dry binder comprises a fibrillized binder that is a fluorine-based binder.

5. The electrode (100) as claimed in claim 4, wherein the dry binder has a glass transition temperature (T_{g}) of 15 °C to 150 °C determined by dynamic mechanical analysis (DMA), and
an amount of the dry binder is 0.1 wt% to 5 wt% with respect to a total weight of the dry electrode film.

6. The electrode (100) as claimed in one or more of claims 3 through 5, wherein the dry electrode film further comprises a dry conductive material,
wherein the dry conductive material comprises a carbon-based conductive material, and
wherein the carbon-based conductive material comprises a fibrous carbon-based material having an aspect ratio of 10 or more, a particulate carbon-based material having an aspect ratio of 5 or less, or a combination thereof, and
an amount of the dry conductive material is 0.1 wt% to 5 wt% with respect to a total weight of the dry electrode film.

7. The electrode (100) as claimed in one or more of claims 3 through 6, wherein the dry electrode film is free of a residual processing solvent.

8. The electrode (100) of any one of the preceding claims, wherein the electrode active material layer (120) covers the entire side surface A (A1, A2, A3) of the first region (132) of the metal lead (130).

9. The electrode (100) of any one of the preceding claims, wherein the electrode (100) is free of an insulating layer (140) on the metal lead and the electrode current collector (110).

10. The electrode (100) of any one of the preceding claims, wherein the electrode active material layer (120) further covers at least a portion of an upper surface B of the first region (132) of the metal lead (130).

11. The electrode (100) of any one of the preceding claims, wherein a thickness T2 of an area of the electrode active material layer (120) that overlaps the metal lead (130), is less than a thickness T1 of an area of the electrode active material layer (120) that overlaps the electrode current collector (110).

12. The electrode (100) of any one of the preceding claims, wherein the metal lead (130) comprises an uneven portion on the first region (132).

13. The electrode (100) as claimed in claim 12, wherein an area of the uneven portion is 50 % or more of a total area of the first region (132).

14. The electrode (100) of any one of the preceding claims, wherein a length L of the first region (132) of the metal lead (130) is at most equal to a width W of the electrode current collector (110).

15. A lithium battery (1) comprising:
a cathode (3);
an anode (2); and
an electrolyte between the cathode (3) and the anode (2),
wherein at least one of the cathode (3) or the anode (2) is the electrode (100) according to claim 1.
